(19) Europäisches Patentamt
European Patent Office
Office européen des brevets

(11)  **EP 4 386 575 B1**

(12)  **EUROPEAN PATENT SPECIFICATION**

(45) Date of publication and mention
of the grant of the patent:
**26.11.2025  Bulletin 2025/48**

(51) International Patent Classification (IPC):
*H04L 9/00* (2022.01)   *G06F 16/23* (2019.01)
*G06F 21/62* (2013.01)

(21) Application number: **22866426.4**

(22) Date of filing: **25.08.2022**

(52) Cooperative Patent Classification (CPC):
**H04L 67/104; G06F 21/64; H04L 9/08; H04L 9/32;
H04L 9/3239; H04L 9/50; H04L 67/1097**

(86) International application number:
**PCT/CN2022/114678**

(87) International publication number:
**WO 2023/035957 (16.03.2023 Gazette 2023/11)**

(54) **COMMUNICATION METHOD AND APPARATUS**

KOMMUNIKATIONSVERFAHREN UND -VORRICHTUNG

PROCÉDÉ ET APPAREIL DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **09.09.2021  CN 202111055515**

(43) Date of publication of application:
**19.06.2024  Bulletin 2024/25**

(73) Proprietor: **Huawei Technologies Co., Ltd.
Shenzhen, Guangdong 518129 (CN)**

(72) Inventors:
• **WANG, Donghui
Shenzhen, Guangdong 518129 (CN)**
• **CHEN, Jing
Wuhan, Hubei 430072 (CN)**
• **LIU, Fei
Shenzhen, Guangdong 518129 (CN)**

• **JIA, Meng
Wuhan, Hubei 430072 (CN)**

(74) Representative: **Pfenning, Meinig & Partner mbB
Patent- und Rechtsanwälte
Theresienhöhe 11a
80339 München (DE)**

(56) References cited:
CN-A- 111 639 935      CN-A- 111 753 335
CN-A- 111 753 335      CN-A- 112 541 195
CN-A- 112 887 078      US-A1- 2020 382 282
US-A1- 2021 314 164

• ATENIESE GIUSEPPE ET AL: "Redactable
Blockchain - or - Rewriting History in Bitcoin and
Friends", 2017 IEEE EUROPEAN SYMPOSIUM
ON SECURITY AND PRIVACY (EUROS&P), IEEE,
26 April 2017 (2017-04-26), pages 111 - 126,
XP033113282, DOI: 10.1109/EUROSP.2017.37

EP 4 386 575 B1

## Description

## TECHNICAL FIELD

This application relates to the field of communication technologies, and in particular, to a communication method and apparatus.

## BACKGROUND

A blockchain technology is a distributed network data management technology. In the technology, mechanisms such as a cryptography technology and a distributed consensus protocol are used, to ensure security of network transmission and access. Therefore, multi-party maintenance, cross-verification, and network-wide consistency of data are implemented, and the data is not easily tampered with.

In a development process of the blockchain technology, a requirement for editing a blockchain gradually emerges. For example, some information is not filtered before being stored in the blockchain, and a lawbreaker may take advantage of this to store malicious information in the blockchain. Because the blockchain cannot be tampered with, the malicious information is permanently stored in the blockchain. To avoid the illegal information, some users are unwilling to use the blockchain. Consequently, development of the blockchain is restricted to some extent. An editable blockchain can resolve the problem. For another example, with approval of the European Union on requirements for general data protection regulation (GDPR), when some conditions are met, a user may request to delete personal data of the user that is stored in the blockchain, to meet a right to be forgotten (right to be forgotten, RTBF) of the user. An application that does not comply with the GDPR is not adopted by the European Union. Because the blockchain cannot be edited, the requirement of deleting information cannot be met. It is clear that the blockchain does not comply with the GDPR. Consequently, the non-editable feature of the blockchain may restrict the development of the blockchain.

In conclusion, the blockchain tends to develop to be editable. However, how to implement editability of the blockchain is a problem that needs to be resolved.

CN111753335A discloses a block content editing method and device. The method can comprise the steps: enabling a blockchain node Bi to receive a block editing transaction usedfor editing original block content m of a block Qi into target block content m', wherein a parent hash corresponding to the block Qi is recorded in a block header of a block Qi + 1, and the parent hash is generated by calculating the original block content m, a public key H and an original random number r; under the condition that the blockchain node Bi determines that the block editing transaction passes the consensus, executing the intelligent contract for generating the random number, wherein the intelligent contract is used for generating a private key X through secure multi-party calculation and determining a corresponding target random number r' according to the original block content m, the target block content m', the original random number r and the private key X, and a hash value generated through calculation of the target block content m', the public key H and the target random number r' is the same as that of the parent hash; and enabling the blockchain node Bi to update (m, r) as (m', r').

CN111639935A discloses discloses a completely decentralized and high-compatibility blockchain account book modification method, which mainly comprises the following steps of: improving a chameleon hash algorithm, and allowing a plurality of nodes to jointly generate a chameleon hash public and private key by the improved algorithm; replacing the original hash function of the blockchain by using the improved chameleon hash algorithm, so that the transaction modification and deletion functions are realized under the condition of not influencing the integrity verification of forward and backward blocks ofthe block chain account book with the corresponding height; and the availability and responsibility of the editable blockchain system under some special conditions are perfected. The modification method provided by the invention has the advantages of relatively good block compression ratio, relatively high block modification speed, relatively high security and the like, and can be compatible withmost of block chain systems existing in the market.

ATENIESE GIUSEPPE ET AL: "Redactable Blockchain - or - Rewriting History in Bitcoin and Friends," 2017 IEEE EUROPEAN SYMPOSIUM ON SECURITY AND PRIVACY (EUROS&P), IEEE, April 26, 2017 (2017-04-26), pages 111-126, XP033113282 discloses a framework for creating redactable blockchains, allowing the content of blocks to be rewritten or compressed in decentralized services. The authors argue that editable blockchains have several benefits, including removing inappropriate content, supporting applications requiring rewritable storage, and implementing "the right to be forgotten."

## SUMMARY

Embodiments of this application provide a communication method and apparatus, to implement editability of a blockchain.

The invention is defined in the appended set of claims. According to a first aspect, a first communication method is provided. The method may be performed by a first node. The first node is, for example, a blockchain node or a client, and the client can communicate with the blockchain node. The method includes: The first node determines a first message, and sends the first message. The first message includes at least one of request information and information about a first transaction, the request information is used to request to modify a second transaction, the first transaction is a modified second transaction, and the second transaction is stored in a first blockchain. The first blockchain includes N blocks, an $i^{th}$ block in the first blockchain includes a first field and a second field, and the second field is used to store a second preset value or a second hash value of a previous block whose block height is the same as a block height of the $i^{th}$ block. When i=1, the first field is used to store a first preset value, or when i is greater than 1 and less than or equal to N, the first field is used to store a first hash value of a previous block whose block height is different from the block height of the $i^{th}$ block, where i is an integer ranging from 1 to N. The first hash value is a hash value obtained according to a first hash function, same output information can be obtained according to the first hash function under a first condition based on different input information, the second hash value is a hash value obtained according to a second hash function, and same output information cannot be obtained according to the second hash function under the first condition based on different input information.

In this embodiment of this application, the $i^{th}$ block in the first blockchain includes the first field and the second field, the first field may store the first hash value, and the first hash value is obtained according to the first hash function. Same output information can be obtained according to the first hash function under the first condition based on different input information, so that different blocks can have a same first hash value. In this manner, editability of the block is implemented, to implement editability of the blockchain. In addition, the second field may store the second hash value, and the second hash value is obtained according to the second hash function. Same output information cannot be obtained according to the second hash function under the first condition based on different input information. Therefore, the second hash value may be unique for a block, and the block can be uniquely identified by using the second hash value. Therefore, even if a block is modified, a second hash value of the block and a second hash value of a modified block may be used to distinguish the two blocks, to verify each block in the blockchain. It can be learned that, according to the technical solutions in embodiments of this application, not only editability of a blockchain can be implemented, but also a block can be verified.

In an optional implementation, the first hash function is a chameleon hash function, and the second hash function is a non-chameleon hash function. Another hash function other than the chameleon hash function may be considered as a non-chameleon hash function. For example, the second hash function is a common hash function.

In an optional implementation, the method further includes: The first node receives at least one random number from at least one node. One of the at least one node corresponds to one of the at least one random number, and both the first node and the at least one node are nodes in the first blockchain. The first node determines a first random number based on the at least one random number, where the first random number is used to obtain a first hash value of a block storing the first transaction. The first node sends a second message, where the second message includes the first random number. After determining the first random number, the first node may generate a block based on the first random number. In addition, the first node may further send the first random number, so that another blockchain node can also store the first random number.

In an optional implementation, the method further includes: The first node generates a first block based on the first random number. The first block is used to store the first transaction, the first block is a modified second block, the second block is used to store the second transaction, a first hash value of the second block is the same as a first hash value of the first block, and the second message includes information about the first block. The first node generates the first block, and the first transaction can be stored by using the first block. The first node may send the first random number, send information about the first block, or send the first random number and information about the first block. Because the first node generates the first block, the first node sends the information about the first block, to enable another blockchain node to update the first blockchain. This ensures consistency of blockchains maintained by blockchain nodes.

In an optional implementation, the method further includes: The first node updates an accumulator based on a third hash value of the second block. An updated value of the accumulator is stored in a third block, the third block is a block, in the first blockchain, that corresponds to a latest block height, and the third hash value is a hash value obtained according to a third hash function. The third hash function is, for example, a non-chameleon function. The third hash function and the second hash function may be a same type of hash function, or may be different hash functions. The value of the accumulator may be obtained based on a third hash value of a modified block in the first blockchain. Therefore, whether a block is modified may be determined based on the value of the accumulator. For example, if a block is modified, the value of the accumulator may reflect a third hash value of the block. If a block is not modified, the value of the accumulator does not reflect a third hash value of the block. For example, if the second block is modified, the value of the accumulator may be updated based on the third hash value of the second block, and the value of the accumulator can reflect the third hash value of the second block. If the first block is not modified, the value of the accumulator does not need to be updated based on a third hash value of the first block, and the value of the accumulator does not reflect the third hash value of the first block. In this case, it can be determined, based on the value of the accumulator, that the second block is modified and the first block is not modified. In other words, the block can be verified based on the value of the accumulator.

In a possible implementation, the method further includes: The first node sends transaction information and a witness to a verification node. The transaction information is the information about the first transaction, and the witness is a non-membership witness of the first block, or the transaction information is information about the second transaction, and the witness information is a membership witness of the second block. The first block is used to store the first transaction, the non-membership witness is used to verify, with reference to the accumulator, whether the first block is a latest block (in other words, the non-membership witness is used to verify, with reference to the accumulator, whether the first block is modified) obtained through modification, and the membership witness is used to verify, with reference to the accumulator, whether the second block is modified. A membership witness of a block and a non-membership witness of a block may be provided by using the accumulator. If a block is modified, a membership witness of the block may be provided. If a block is not modified, a non-membership witness of the block may be provided. The block can be verified based on the witness.

In an optional implementation, the method further includes: The first node receives to-be-acknowledged information from the verification node; generates a simplified witness based on the to-be-acknowledged information, where the simplified witness is obtained by simplifying the witness; and sends the simplified witness to the verification node. The verification node may directly verify the received membership witness or non-membership witness, or request the first node to send the simplified witness. The simplified witness is simpler than a complete witness, to simplify a verification process.

In an optional implementation, the method further includes: The first node determines a public key of the first hash function, and generates a first private key share. The first node sends f-1 pieces of first information to f-1 nodes, where each piece of first information indicates the first private key share, and both the f-1 nodes and the first node are nodes in the first blockchain. The first node receives $(j+1)^{th}$ information from a $j^{th}$ node in the f-1 nodes, where the $(j+1)^{th}$ information indicates a private key share of the $j^{th}$ node, and j is an integer ranging from 1 to f-1. The first node obtains first restoration information based on the received information and one piece of possessed first information, where the first restoration information is used to restore a private key corresponding to the public key. In this process, the private key of the first hash function is shared, and the private key of the first hash function can be restored based on f pieces of restoration information of f nodes. If the private key of the first hash function is completely possessed by a node, the node has a right, for example, a right to allocate the private key. Consequently, permission of the node is excessively large, and the node may be referred to as a central node of blockchain nodes, which violates an idea of blockchain decentralization. Therefore, in this embodiment of this application, each of the f nodes possesses only a portion of the private key of the first hash function, and the private key of the first hash function can be restored only by combining f portions possessed by the f nodes. This avoids a case in which the private key of the first hash function is completely possessed by a node, and implements an idea of blockchain decentralization.

In an optional implementation, the method further includes: The first node sends 2f-1 pieces of $(f+2)^{th}$ information to 2f-1 nodes, where each piece of $(f+2)^{th}$ information indicates the first restoration information, and the 2f-1 nodes include the f-1 nodes. The first node receives $(f+k+1)^{th}$ information from a $k^{th}$ node in the 2f-1 nodes, where the $(f+k+1)^{th}$ information indicates restoration information of the $k^{th}$ node, and k is an integer ranging from 1 to 2f-1. The first node obtains second restoration information based on the received information, where the second restoration information is used to restore the private key corresponding to the public key. The f nodes are not necessarily unchangeable. For example, a node may exit, and a node may join. In consideration of these cases, in this embodiment of this application, the private key may be updated. Instead, n nodes possess private key shares, so that the private key of the first hash function can be restored by combining the f nodes in the n nodes. In addition, 2f nodes participate in a private key re-sharing process, to resist a behavior of stealing the private key by 2f-1 malicious nodes. Therefore, security of a private key sharing process is high.

In an optional implementation, that the first node determines a first message includes: The first node receives the first message from a client. For example, if the first node is a blockchain node, the first node may generate the first message, or the first message may be from the client.

According to a second aspect, a second communication method is provided. The method may be performed by a second node. The second node is, for example, a blockchain node, and a first node is different from the second node. The method includes: The second node receives a first message from the first node. The first message includes at least one of request information and information about a first transaction, the request information is used to request to modify a second transaction, the first transaction is a modified second transaction, the second transaction is stored in a first blockchain, and both the first node and at least one node are nodes in the first blockchain. The first blockchain includes N blocks, an $i^{th}$ block in the first blockchain includes a first field and a second field, and the second field is used to store a second preset value or a second hash value of a previous block whose block height is the same as a block height of the $i^{th}$ block. When i=1, the first field is used to store a first preset value, or when i is greater than 1 and less than or equal to N, the first field is used to store a first hash value of a previous block whose block height is different from the block height of the $i^{th}$ block, where i is an integer ranging from 1 to N. The first hash value is a hash value obtained according to a first hash function, same output information can be obtained according to the first hash function under a first condition based on different input information, the second hash value is a hash value obtained according to a second hash function, and same output information cannot be obtained according to the second hash function under the first condition based on different input information. The second node verifies whether the modification or the first transaction is valid; and when a verification result is valid, sends a second random number to the first node, where the second random number is used to determine a first hash value of a block storing the first transaction.

The second node may verify whether content included in the first message is valid. For example, if the first message includes the information about the first transaction, the second node verifies whether the first transaction is valid. If the first message includes the request information, the second node verifies whether the request information is valid (in other words, verifies whether modification indicated by the request information is valid). If the first message includes the request information and the information about the first transaction, the second node verifies whether the request information and the information about the first transaction are valid. If the request information and/or the information about the first transaction are/is invalid, verification fails, and the second node may not send the second random number to the first node.

In an optional implementation, the method further includes: The second node receives a second message, where the second message includes a first random number, and the first random number is used to determine the first hash value of the block storing the first transaction.

In an optional implementation, the second message includes information about a first block, and the first block is a block used to store the first transaction.

In an optional implementation, the method further includes: The second node determines a public key of the first hash function, and generates a second private key share. The second node sends f-1 pieces of second information to f-1 nodes, where each piece of second information indicates the second private key share, and both the f-1 nodes and the second node are nodes in the first blockchain. The second node receives $j^{th}$ information from a $j^{th}$ node in the f-1 nodes, where the $j^{th}$ information indicates a private key share of the $j^{th}$ node, and j is an integer ranging from 1 to f-1. The second node obtains third restoration information based on the received information and one piece of possessed second information, where the third restoration information is used to restore a private key corresponding to the public key.

In an optional implementation, the method further includes: The second node sends 2f-1 pieces of $(f+2)^{th}$ information to 2f-1 nodes, where each piece of $(f+2)^{th}$ information indicates the third restoration information, and the 2f-1 nodes include the f-1 nodes. The first node receives $(f+k)^{th}$ information from a $k^{th}$ node in the 2f-1 nodes, where the $(f+k)^{th}$ information indicates restoration information of the $k^{th}$ node, and k is an integer ranging from 1 to 2f-1. The second node obtains fourth restoration information based on the received information and one piece of possessed $(f+2)^{th}$ information, where the fourth restoration information is used to restore the private key corresponding to the public key.

For technical effect brought by the second aspect or the optional implementations, refer to descriptions of the technical effect brought by the first aspect or the corresponding implementations.

According to a third aspect, a communication apparatus is provided. The communication apparatus may implement the method in the first aspect. The communication apparatus has a function of the first node. The communication apparatus is, for example, the first node, or a functional module in the first node. The first node is, for example, a blockchain node or a client. Alternatively, the communication apparatus may implement the method in the second aspect. The communication apparatus has a function of the second node. The communication apparatus is, for example, the second node, or a functional module in the second node. The second node is, for example, a blockchain node. In an optional implementation, the communication apparatus may include a one-to-one corresponding module for performing the method/operation/step/action described in the first aspect or the second aspect. The module may be implemented by a hardware circuit, software, or a hardware circuit in combination with software. In another optional implementation, the communication apparatus includes a processing unit (which is also referred to as a processing module sometimes) and a transceiver unit (which is also referred to as a transceiver module sometimes). The transceiver unit can implement a sending function and a receiving function. When the transceiver unit implements the sending function, the transceiver unit may be referred to as a sending unit (which is also referred to as a sending module sometimes). When the transceiver unit implements the receiving function, the transceiver unit may be referred to as a receiving unit (which is also referred to as a receiving module sometimes). The sending unit and the receiving unit may be a same functional module, and the functional module is referred to as the transceiver unit. The functional module can implement the sending function and the receiving function. Alternatively, the sending unit and the receiving unit may be different functional modules, and the transceiver unit is a general term for these functional modules.

The processing unit is configured to determine a first message. The transceiver unit (or the sending unit) is configured to send the first message. The first message includes at least one of request information and information about a first transaction, the request information is used to request to modify a second transaction, the first transaction is a modified second transaction, and the second transaction is stored in a first blockchain. The first blockchain includes N blocks, an $i^{th}$ block in the first blockchain includes a first field and a second field, the second field is used to store a second preset value or a second hash value of a previous block whose block height is the same as a block height of the $i^{th}$ block. When i=1, the first field is used to store a first preset value, or when i is greater than 1 and less than or equal to N, the first field is used to store a first hash value of a previous block whose block height is different from the block height of the $i^{th}$ block, where i is an integer ranging from 1 to N, the first hash value is a hash value obtained according to a first hash function, same output information can be obtained according to the first hash function under a first condition based on different input information, the second hash value is a hash value obtained according to a second hash function, and same output information cannot be obtained according to the second hash function under the first condition based on different input information.

Alternatively, the transceiver unit (or the receiving unit) is configured to receive a first message from the first node. The first message includes at least one of request information and information about a first transaction, the request information is used to request to modify a second transaction, the first transaction is a modified second transaction, the second transaction is stored in a first blockchain, and both the first node and at least one node are nodes in the first blockchain. The first blockchain includes N blocks, an $i^{th}$ block in the first blockchain includes a first field and a second field, and the second field is used to store a second preset value or a second hash value of a previous block whose block height is the same as a block height of the $i^{th}$ block. When i=1, the first field is used to store a first preset value, or when i is greater than 1 and less than or equal to N, the first field is used to store a first hash value of a previous block whose block height is different from the block height of the $i^{th}$ block, where i is an integer ranging from 1 to N. The first hash value is a hash value obtained according to a first hash function, same output information can be obtained according to the first hash function under a first condition based on different input information, the second hash value is a hash value obtained according to a second hash function, and same output information cannot be obtained according to the second hash function under the first condition based on different input information. The processing unit is configured to verify whether the modification or the first transaction is valid. When a verification result is valid, the transceiver unit (or the sending unit) is configured to send a second random number to the first node, where the second random number is used to determine a first hash value of a block storing the first transaction.

For another example, the communication apparatus includes a processor. The processor is coupled to a memory, and is configured to execute instructions in the memory, to implement the method in the first aspect or the second aspect. Optionally, the communication apparatus further includes another component, for example, an antenna, an input/output module, and an interface. The components may be hardware, software, or a combination of software and hardware.

According to a fourth aspect, a computer-readable storage medium is provided. The computer-readable storage medium is configured to store a computer program or instructions, and when the computer program or the instructions are run, the method in either the first aspect or the second aspect is implemented.

According to a fifth aspect, a computer program product including instructions is provided. When the computer program product runs on a computer, the method in either the first aspect or the second aspect is implemented.

According to a sixth aspect, a chip system is provided. The chip system includes a logic circuit (or is understood as that the chip system includes a processor, and the processor may include a logic circuit or the like), and may further include an input/output interface. The input/output interface may be configured to receive a message, or may be configured to send a message. For example, when the chip system is configured to implement a function of the first node, the input/output interface may be configured to send a first message. When the chip system is configured to implement a function of the second node, the input/output interface may be configured to receive a first message. The input/output interface may be a same interface, that is, a same interface can implement both a sending function and a receiving function. Alternatively, the input/output interface includes an input interface and an output interface. The input interface is configured to implement a receiving function, that is, configured to receive a message, and the output interface is configured to implement a sending function, that is, configured to send a message. The logic circuit may be configured to generate a message (for example, when the chip system is configured to implement the function of the first node, the logic circuit may generate the first message), and transmit the generated message to the input/output interface, to send the generated message to a communication apparatus other than the chip system. The logic circuit may alternatively be configured to receive, from the input/output interface, a message from another communication apparatus (for example, when the chip system is configured to implement the function of the second node, the logic circuit may receive, the second message from the first node through the input/output interface), and process the received message. The chip system may be configured to implement the method in either the first aspect or the second aspect. The chip system may include a chip, or may include a chip and another discrete component.

Optionally, the chip system may further include a memory. The memory may be configured to store instructions, and the logic circuit may invoke the instructions stored in the memory, to implement a corresponding function.

## BRIEF DESCRIPTION OF DRAWINGS

FIG. 1 is a schematic diagram of a block according to an embodiment of this application;
FIG. 2 is a schematic diagram of a blockchain according to an embodiment of this application;
FIG. 3 to FIG. 6 are flowcharts of several communication methods according to an embodiment of this application; and
FIG. 7 is a schematic diagram of a communication apparatus according to an embodiment of this application.

## DESCRIPTION OF EMBODIMENTS

To make objectives, technical solution, and advantages of embodiments of this application clearer, the following further describes embodiments of this application in detail with reference to the accompanying drawings.

Embodiments of this application relate to a blockchain. A block may store data, and a plurality of blocks are connected in sequence to form a chain, which is referred to as a blockchain. Main features of the blockchain are as follows.

1. The blockchain is distributed: One blockchain is replicated into a plurality of copies, and the copies are separately maintained on different member servers.

2. The blockchain cannot be tampered with: Each block in the blockchain calculates a hash (hash) value based on data stored in the block, and each block in the blockchain records a hash value of a previous block and a hash value of the block. If content stored in a block changes, a hash value of the block changes, and a next block of the block stores the unchanged hash value of the block. When the next block verifies a changed hash value of the block based on the unchanged hash value, verification fails.

3. The blockchain can be traced: The blocks are connected to form the blockchain. A change history of the entire blockchain can be traced back in a connection sequence of the blocks in the blockchain.

In embodiments of this application, unless otherwise specified, a quantity of nouns represents "a singular noun or a plural noun", that is, "one or more". "At least one" means one or more, and "a plurality of" means two or more. The term "and/or" describes an association relationship between associated objects and may indicate three relationships. For example, A and/or B may indicate the following cases: Only A exists, both A and B exist, and only B exists, where A and B may be singular or plural. The character "/" usually indicates an "or" relationship between the associated objects. For example, A/B indicates A or B. "At least one of the following items (pieces)" or a similar expression thereof refers to any combination of these items, including any combination of singular items (pieces) or plural items (pieces). For example, at least one of a, b, or c indicates a, b, c, a and b, a and c, b and c, or a, b, and c, where a, b, and c may be singular or plural.

In general, in embodiments of this application, a first blockchain is provided, an $i^{th}$ block in the first blockchain includes a first field and a second field, the first field may store a first hash value, and the first hash value is obtained according to a first hash function. Same output information can be obtained according to the first hash function under a first condition based on different input information, so that different blocks can have a same first hash value. In this manner, editability of the block is implemented, to implement editability of the blockchain. In addition, the second field may store a second hash value, and the second hash value is obtained according to a second hash function. Same output information cannot be obtained according to the second hash function under the first condition based on different input information. Therefore, the second hash value may be unique for a block, and the block can be uniquely identified by using the second hash value. Therefore, even if a block is modified, a second hash value of the block and a second hash value of a modified block may be used to distinguish the two blocks, to verify each block in the blockchain. It can be learned that, according to the technical solutions in embodiments of this application, not only editability of a blockchain can be implemented, but also a block can be verified.

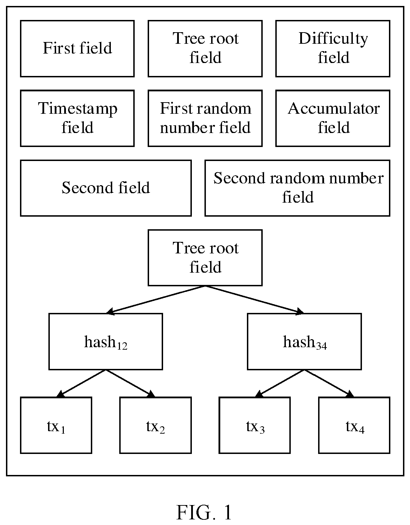

FIG. 1 is a schematic diagram of one block included in the first blockchain according to an embodiment of this application. For ease of description, the block is referred to as a block A. The first blockchain includes N blocks. The block A is, for example, an $i^{th}$ block included in the first blockchain, where i may be understood as an index of the block A in the N blocks, i may be an integer ranging from 1 to N, and N is a positive integer. The block A includes a plurality of fields, and the plurality of fields include, for example, a first field, a second field, a tree root field, a difficulty field, a timestamp field, a first random number field, a second random number field, and an ACC field.

For example, the first field may also be referred to as a prev_hash field or may have another name. If the block A is a $1^{st}$ block (i=1) in the first blockchain, the first field of the block A may be used to store a first preset value. Alternatively, if the block A is not a $1^{st}$ block in the first blockchain, for example, i is greater than 1 and less than or equal to N, and N is a total quantity of blocks included in the first blockchain, the first field of the block A may be used to store a first hash value of a previous block whose block height is different from a block height of the block A. A first hash value of a block is, for example, obtained based on a block header of the block. For example, content of a block header of the block is input to a first hash function, to obtain the first hash value of the block. If the block A is the $1^{st}$ block in the first blockchain, there is no block before the block A in the first blockchain.

Therefore, the first field of the block A may store the first preset value. For example, the first preset value is all 0s, all 1s, or another value. If the block A is not the 1st block in the first blockchain, a block (for example, a block whose index is less than i) before the block A exists in the first blockchain. If a block height of a block in the blocks is different from the block height of the block A, the first field of the block A may store a first hash value of the previous block whose block height is different from the block height of the block A. Alternatively, if block heights of all blocks before the block A are the same as the block height of the block A, the first field of the block A may store the first preset value. For example, the block A is a 3rd block in the first blockchain, and there are a block B and a block C before the block A, where the block B is before the block C. If both a block height of the block B and a block height of the block C are different from the block height of the block A, the first field of the block A may store a first hash value of the block C (in addition, a first field of the block C may store a first hash value of the block B). Alternatively, if a block height of the block B is different from the block height of the block A, and a block height of the block C is the same as the block height of the block A, the first field of the block A may store a first hash value of the block B. Alternatively, if a block height of the block B is the same as the block height of the block A, and a block height of the block C is different from the block height of the block A, the first field of the block A may store a first hash value of the block C.

In embodiments of this application, the first hash value of the block is obtained according to the first hash function. For example, a first hash value of any block in the first blockchain is obtained according to the first hash function. Same output information can be obtained according to the first hash function under a first condition based on different input information. The first condition includes, for example, a key condition, and certainly may further include another condition. For example, if the first condition includes the key condition, when a private key corresponding to the first hash function is fixed, same output information can be obtained by inputting different input information to the first hash function. For example, the private key of the first hash function is P1. When the private key remains unchanged, another piece of input information x2 keeps being found for input information x1, so that the two pieces of input information correspond to same output information according to the first hash function. The first hash function is, for example, a chameleon function or another hash function.

For example, the second field may also be referred to as a last_hash field or may have another name. The second field of the block A may be used to store a second preset value, or used to store a second hash value of a previous block whose block height is the same as the block height of the block A. A second hash value of a block is, for example, obtained based on a block header of the block. For example, content of the block header of the block is input to a second hash function, to obtain the second hash value of the block. For example, the first blockchain includes a plurality of blocks, and each of the blocks has a corresponding index in the blockchain. If the block A is the 1st block in the first blockchain, there is no block before the block A in the first blockchain. Therefore, the second field of the block A may store the second preset value. For example, the second preset value is all 0s, all 1s, or another value. The second preset value may be the same as or different from the first preset value. If the block A is not the 1st block in the first blockchain, a block (for example, a block whose index is less than an index of the block A) before the block A exists in the first blockchain. If a block height of a block in the blocks is the same as the block height of the block A, the second field of the block A may store a second hash value of a previous block whose block height is the same as the block height of the block A. Alternatively, if block heights of all blocks before the block A are different from the block height of the block A, the second field of the block A may store the second preset value. For example, the block A is a 3rd block in the first blockchain, and there are the block B and the block C before the block A, where the block B is before the block C. If both the block height of the block B and the block height of the block C are the same as the block height of the block A, the second field of the block A may store a second hash value of the block C (in addition, a second field of the block C may store a second hash value of the block B). Alternatively, if the block height of the block B is different from the block height of the block A, and the block height of the block C is the same as the block height of the block A, the second field of the block A may store a second hash value of the block C. Alternatively, if the block height of the block B is the same as the block height of the block A, and the block height of the block C is different from the block height of the block A, the second field of the block A may store a second hash value of the block B.

The second hash value is obtained according to the second hash function. For example, a second hash value of any block in the first blockchain is obtained according to the second hash function. Same output information cannot be obtained according to the second hash function under the first condition based on different input information. The first condition includes, for example, the key condition, and certainly may further include another condition. For example, if the first condition includes the key condition, when a private key corresponding to the second hash function is fixed, same output information cannot be obtained by inputting different input information to the second hash function. For example, the private key of the second hash function is P1. When the private key remains unchanged, another piece of input information x2 cannot be found for input information x1, so that the two pieces of input information correspond to same output information according to the second hash function. Compared with the first hash function, the second hash function may be considered as a common hash function.

It may be understood that in the first blockchain, blocks with different block heights may be connected by using the first field, and blocks with a same block height may be connected by using the second field.

For example, the tree root field is also referred to as an m_root field or may have another name. The tree root field of the block A may store a Merkel tree root of a transaction of the block A.

For example, the difficulty field may also be referred to as a difficulty field or may have another name. The difficulty field of the block A is used to store a difficulty value of consensus.

For example, the timestamp field is also referred to as a timestamp field or may have another name. The timestamp field of the block A is used to store a timestamp of the block A.

For example, the first random number field is also referred to as a nonce field or may have another name. The first random number field of the block A may be used to store a random number of a consensus mechanism.

For example, the second random number field is also referred to as a randomness field or may have another name. The second random number field of the block A may be used to store a random number of the first hash value of the block A, and the random number may be used to generate the first hash value of the block A.

For example, the ACC field is also referred to as an accumulator field or may have another name. The ACC field of the block A may be used to store a value of an accumulator (accumulator), and the accumulator corresponds to the first blockchain. A concept of the accumulator is described later.

In addition, in FIG. 1, $hash_{12}$ indicates a hash value obtained by performing a hash operation on $tx_1$ and $tx_2$, and $hash_{34}$ indicates a hash value obtained by performing a hash operation on $tx_3$ and $tx_4$. Then, a hash operation is performed on $hash_{12}$ and $hash_{34}$, where an obtained hash value may be stored in the tree root field, and the hash value is the Merkel tree root of the transaction of the block A. The hash operation herein is, for example, an operation performed according to the second hash function or an operation performed according to another hash function. For example, the block A stores four transactions, and $tx_1$, $tx_2$, $tx_3$, and $tx_4$ respectively indicate hash values of the four transactions.

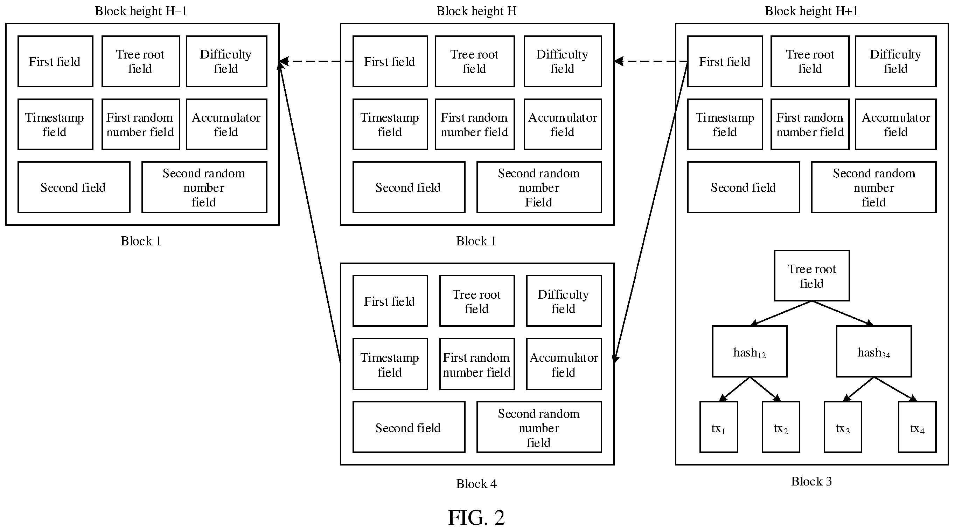

FIG. 2 is a schematic diagram of the first blockchain. In FIG. 2, an example in which the first blockchain includes four blocks is used, and the four blocks are respectively a block 1, a block 2, a block 3, and a block 4. For structures of the four blocks, refer to FIG. 1. For example, a block height of the block 1 is H-1, a block height of the block 2 is H, and a block height of the block 3 is H+1. In addition, the block 4 is a block obtained by modifying the block 2. Therefore, a block height of the block 4 is equal to the block height of the block 2, and is also H. In FIG. 2, a previous block whose block height is the same as the height of the block 4 is the block 2, and a last_hash field of the block 4 may store a second hash value of the block 2, which may be represented as: $last\_hash_4 = Hash(block\_header(2))$, where $last\_hash_4$ indicates content stored in the last_hash field of the block 4, block_header(2) indicates content of a block header of the block 2, and Hash(block_header(2)) indicates that a hash function is used to process the content of the block header of the block 2, and the hash function is, for example, the second hash function. For the block 2, there is no previous block whose block height is the same as the height of the block 2. Therefore, a last_hash field of the block 2 may store the second preset value. This is the same for the block 1 and the block 3, and last_hash fields of the block 1 and the block 3 may store the second preset value.

In FIG. 2, a previous block whose block height is different the height of the block 2 is the block 1, and a prev_hash field of the block 2 may store a first hash value of the block 1, which may be represented as: $prev\_hash2 = chameleon(pk, (prev\_hash, m\_root, difficulty, timestamp, nonce, ACC, last\_hash)_1, randomness_1)$, where prev_hash2 indicates content stored in the prev_hash field of the block 2. pk indicates a public key of the first hash function. Herein, an example in which the first hash function is a chameleon hash function (chameleon indicates a chameleon hash function) is used. $(prev\_hash, m\_root, difficulty, timestamp, nonce, ACC, last\_hash)_1, randomness_1)$ indicates content stored in each field of the block 1. For descriptions of the fields, refer to the foregoing descriptions. In addition, a previous block whose block height is different from the height of the block 4 is also the block 1, and a prev_hash field of the block 4 may also store the first hash value of the block 1. Details are not described herein again.

A previous block whose block height is different from the height of the block 3 is the block 2 (or the block 4), and a prev_hash field of the block 3 may store a first hash value of the block 2 or the first hash value of the block 4. The first hash value of the block 2 is the same as the first hash value of the block 4. Content stored in the prev_hash field of the block 3 may be represented as: $prev\_hash3 = chameleon(pk, (prev\_hash, m\_root, difficulty, timestamp, nonce, ACC, last\_hash)_2, randomness_2) = chameleon(pk, (prev\_hash, m\_root, difficulty, timestamp, nonce, ACC, last\_hash)_4, randomness_4)$, where prev _hash2 indicates content stored in the prev_hash field of the block 2. $(prev\_hash, m\_root, difficulty, timestamp, nonce, ACC, last\_hash)_2, randomness_2)$ indicates content stored in each field of the block 2. $(prev\_hash, m\_root, difficulty, timestamp, nonce, ACC, last\_hash)_4, randomness_4)$ indicates content stored in each field of the block 4. For descriptions of the fields, refer to the foregoing descriptions.

If the block 1 is a 1st block in the first blockchain, there is no block before the block 1. Therefore, a prev_hash field of the block 1 may store the first preset value.

It can be seen from FIG. 2 that, for blocks (for example, blocks 1, 2, and 3) with different block heights, links between the blocks are implemented by using first fields. For blocks (for example, blocks 2 and 4) with a same block height, a link between the blocks is implemented by using the second field. Because the first hash function is introduced, a first hash value of an edited block (or a modified block) may be the same as a first hash value of a block (or a block before modification) before editing, to implement effect of editability of a block. However, due to the second hash function, each block has a unique identifier, so that each block in the blockchain can be verified.

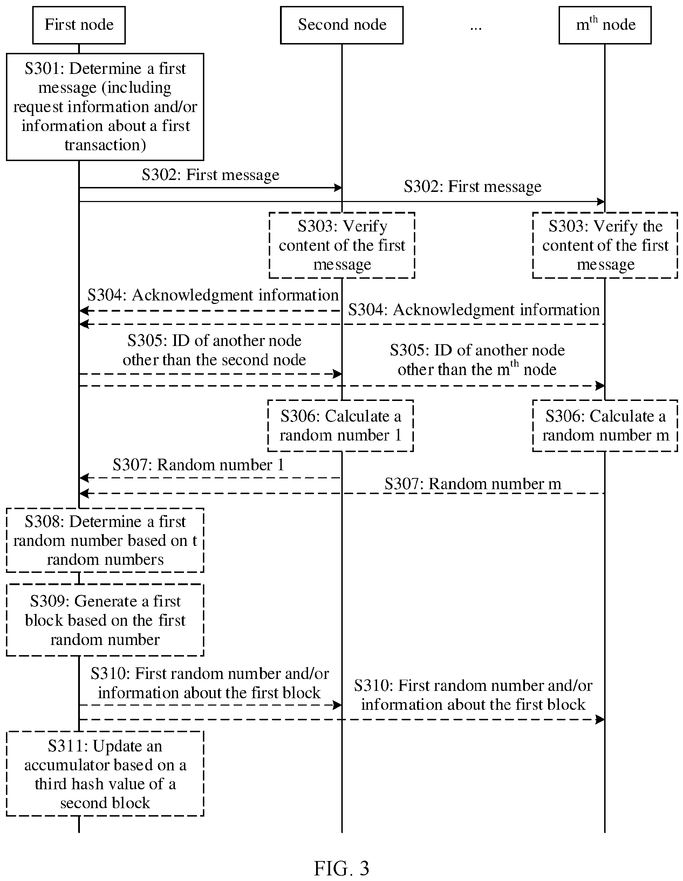

The following describes the method provided in embodiments of this application with reference to the accompanying drawings. In the method in embodiments of this application, for a structure of each block, refer to FIG. 1. In the accompanying drawings corresponding to embodiments of this application, steps represented by dashed lines are all optional steps. An embodiment of this application provides a first communication method. FIG. 3 is a flowchart of the method.

S301: A first node determines a first message. The first message may include request information and/or information about a first transaction, the request information may request to modify a second transaction, and the first transaction is a modified second transaction. In other words, the first message may only request to modify the second transaction, or the first message may include information about the modified second transaction (namely, the first transaction). The information about the first transaction includes, for example, a sequence number (sequence number) of the first transaction, and/or a hash value of the first transaction. For example, the hash value of the first transaction is a hash value obtained by inputting the first transaction to a fourth hash function. The fourth hash function may be the same as or different from a second hash function.

The first node is, for example, a blockchain node, and may be referred to as a first blockchain node. The first blockchain node may maintain (or store) a first blockchain. The first blockchain includes, for example, N blocks. For a structure of each of the N blocks, refer to FIG. 1. N is a positive integer. The N blocks include a second block, and the second block stores, for example, the second transaction. For example, a manner in which the first blockchain node determines the first message is that the first blockchain node generates the first message. For example, when the first blockchain node determines that the second transaction needs to be modified, the first blockchain node may generate the first message, and the first message may be used to modify the second transaction.

For example, another manner in which the first blockchain node determines the first message is that the first blockchain node receives the first message from a client. For example, when the client determines that the second transaction needs to be modified, the client may send first messages to one or more blockchain nodes. The one or more blockchain nodes include the first blockchain node, so that the first blockchain node may receive the first message.

Alternatively, the first node is, for example, the client. For example, a manner in which the client determines the first message is that the client generates the first message. For example, when the client determines that the second transaction needs to be modified, the client may generate the first message, and the first message may be used to modify the second transaction.

S302: The first node sends the first message.

If the first node is the first blockchain node, the first node sends the first message. For example, the first node broadcasts the first message in a blockchain system. In this way, all or some blockchain nodes in the blockchain system may receive first messages. This is used as an example in FIG. 3. Alternatively, if the first node is the client, the first node sends the first message. For example, the first node sends first messages to one or more blockchain nodes in a blockchain system, so that the one or more blockchain nodes may receive the first messages. In addition, after the first messages are received, some or all of the one or more blockchain nodes may broadcast the first messages in the blockchain system. Then, refer to S303 and a subsequent step.

In FIG. 3, an example in which the first node is the first blockchain node is used. In FIG. 3, a second node is, for example, a second blockchain node, and an $m^{th}$ node is, for example, an $m^{th}$ blockchain node, where m is an integer greater than 2. For example, M blockchain nodes are some or all blockchain nodes included in the blockchain system. The blockchain system may include the M blockchain nodes, and the blockchain nodes may jointly maintain a same blockchain. For example, the blockchain nodes may jointly maintain the first blockchain. Actually, M may be a positive integer. In FIG. 3, that M is greater than 3 is used as an example (that is, in FIG. 3, the blockchain system at least includes the first node, the second node, and the $m^{th}$ node).

S303: A node that receives the first message verifies the first message. For example, the node that receives the first message may verify content included in the first message.

For example, if t blockchain nodes from the second node to the $m^{th}$ node receive the first messages, each of the t blockchain nodes may verify the first message, to determine whether the first message is valid. If the first message includes the information about the first transaction, the second node verifies whether the first transaction is valid. If a verification result is that the first transaction is valid, the second node continues to perform S304. If a verification result is that the first transaction is invalid, the second node does not perform S304; or when the second node performs S304, the step is replaced with that the second node sends failure information, where the failure information may indicate that the first transaction is invalid, or indicate that the second node does not participate in current modification. If the first message includes the request information, the second node verifies whether the request information is valid. If a verification result is that the request information is valid, the second node continues to perform S304. If a verification result is that the request information is invalid, the second node does not perform S304; or when the second node performs S304, the step is replaced with that the second node sends failure information, where the failure information may indicate that the request information is invalid, or indicate that the second node does not participate in current modification. If the first message includes the request information and the information about the first transaction, the second node verifies whether the request information and the information about the first transaction are valid. If a verification result is that both the request information and the information about the first transaction are valid, the second node continues to perform S304. If a verification result is that the request information and/or the first transaction are/is invalid, the second node does not perform S304; or when the second node performs S304, the step is replaced with that the second node sends failure information, where the failure information may indicate that the request information and/or the first transaction are/is invalid, or indicate that the second node does not participate in current modification. t is a positive integer less than or equal to M-1.

S304: The node that receives the first message sends acknowledgment information.

The second node is used as an example. If the second node determines, in the verification process in S303, that the content included in the first message is valid (the content included in the first message is the request information and/or the information about the first transaction), or determines to participate in a current transaction modification process, the second node may send the acknowledgment information. The acknowledgment information may be used to acknowledge that the second node participates in current modification, or used to acknowledge that the content included in the first message is valid (for example, specifically indicating that the request information is valid, and/or indicating that the information about the first transaction is valid). If the second node determines that the content included in the first message is invalid, or determines not to participate in the current transaction modification process, the second node may not send the acknowledgment information, that is, not perform S304; or the second node may send failure information, where the failure information indicates that the second node does not participate in the current modification process, or indicates that the content included in the first message is invalid (for example, specifically indicating that the request information is invalid, and/or indicating that the information about the first transaction is invalid). Optionally, the acknowledgment information may include an identity number (ID) of the second node or other information.

The second node sends the acknowledgment information. In one manner, the second node sends the acknowledgment information to the first node, that is, sends the acknowledgment information to an initiator of the first message. The first node may receive the acknowledgment information from the second node. Alternatively, in another manner, the second node broadcasts acknowledgment information, and some or all blockchain nodes in the blockchain system can receive the acknowledgment information. The blockchain nodes that receive the acknowledgment information may include the first node, or may not include the first node.

For the t nodes that receive the first messages, execution processes are also similar. In this embodiment of this application, that the nodes send acknowledgment information to the first node is used as an example. To distinguish acknowledgment information from different nodes, the acknowledgment information sent by a $t^{th}$ node may be referred to as $t^{th}$ acknowledgment information. For example, the acknowledgment information sent by the second node is referred to as second acknowledgment information. For example, the acknowledgment information sent by the t nodes includes IDs of the t nodes (one piece of acknowledgment information includes an ID of one node), the ID of the second node is represented as $x_{id_2}$, an ID of a third node is represented as $x_{id_3}$, ..., and an ID of the $t^{th}$ node is represented as $x_{id_t}$.

S305: The first node sends an ID of another node other than a $(t')^{th}$ node in the t nodes to the $(t')^{th}$ node in the t nodes. Correspondingly, an $i^{th}$ node receives, from the first node, the ID of the another node other than the $(t')^{th}$ node in the t nodes, where t' is an integer ranging from 1 to t. For example, the first node sends t-1 IDs of remaining t-1 nodes other than the second node in the t nodes to the second node.

If the node that receives the first message sends the acknowledgment information to the first node, S305 may be performed. If the node that receives the first message broadcasts the acknowledgment information, S305 may not be performed, but S306 is performed. Each of the t nodes can obtain the IDs of the t nodes through S305.

S306: Each of the t nodes calculates one random number.

For example, for one of the t nodes, one random number may be determined based on the IDs of the t nodes. For example, a manner of determining the random number is as follows:

$$h_{t'} = (h(g'^{-1}))^{\lambda_{t'} sk_{t'}} \quad \text{(formula 1)}$$

In the formula 1, $h_{t'}$ indicates a random number calculated by the $(t')^{th}$ node in the t nodes. g' indicates a hash value of a block header of a block used to store the first transaction, and the hash value is the foregoing hash value, included in the first message, of the first transaction. $\lambda_{t'}$ is a Lagrange coefficient determined by the $(t')^{th}$ node, for example, $\lambda_{t'}$ is determined based on the IDs of the t nodes. $sk_{t'}$ is a parameter, for example, the parameter is determined based on g'.

For example, a random number calculated by the second node in FIG. 3 is referred to as a random number 1, and a random number calculated by the $m^{th}$ node is referred to as a random number m.

S307: Each of the t nodes sends the random number to the first node. Correspondingly, the first node may receive t random numbers.

S308: The first node determines a first random number based on the t random numbers. For example, the first random number is used to obtain the first hash value of the block storing the first transaction. It may be understood that after determining the first random number, the first node may determine, based on the first random number, the first hash value of the block storing the first transaction.

S309: The first node generates a first block based on the first random number. The first block may store the first transaction, the first transaction is a modified second transaction, the second transaction is stored in a second block, and the first block may be considered as the modified second block. A first hash value of the first block may be the same as a first hash value of the second block.

S310: The first node sends a second message. For example, the first node sends the second message in a broadcast manner. One or more blockchain nodes in the blockchain system can receive second messages. In FIG. 3, an example in which m nodes receive second messages is used.

The second message may include the first random number, information about the first block, or the first random number and information about the first block. The information about the first block includes, for example, the content stored in the first block, and may further include an identifier (for example, an index and/or an ID of the first block) of the first block. Optionally, the first random number may be stored in the first block. Therefore, the information about the first block may also include the first random number.

For example, if the first node sends the information about the first block, the node that receives the second message may verify the first block. If verification succeeds, the first blockchain may be updated based on the information about the first block, to update the first blockchain on each blockchain node.

S311: The first node updates an accumulator based on a third hash value of the second block.

An updated accumulator (or an updated value of the accumulator) may be stored in a third block, and the third block is a block corresponding to a latest block height in the first blockchain. When the accumulator is updated, the third block has not been generated, and the updated accumulator may be stored in the third block after the third block is generated. In this embodiment of this application, the value of the accumulator may be updated when a block in the blockchain is modified. For example, for the first blockchain, if a block in the first blockchain is modified, the value of the accumulator corresponding to the first blockchain may be updated. The blockchain shown in FIG. 2 is used as an example. None of the block 1 to the block 4 is the third block. For example, the third block has not been generated. For example, a block 5 is generated subsequently, and a block height of the block 5 is different from block heights of the block 1 to the block 4. In this case, the block 5 may be used as the third block.

The third hash value may be obtained according to a third hash function. For example, content (all content of the second block, content of a block header of the second block, or the like) of the second block is input to the third hash function, to obtain the third hash value of the second block. The third hash function may be a special hash function.

For example, the accumulator is an RSA accumulator or an accumulator of another type. In this embodiment of this application, an example in which the accumulator is an RSA accumulator is used. The RSA accumulator is a specific hash accumulation calculation method, and the calculation method is as follows:

$$d = g^{\prod_{i=1}^{c} h(x_i)} \quad (\text{formula } 2)$$

d indicates a value of the RSA accumulator. g indicates a fixed generator, and may be understood as a constant. $\prod_{i=1}^{a} h(x_i)$ indicates that a product of $h(x_i)$ is obtained continuously, where i is an integer ranging from 1 to c. c indicates a quantity of modified blocks in the first blockchain. h(x) is a hash function, for example, the third hash function, corresponding to the RSA accumulator. For example, if $x_i$ indicates information about the second block (for example, indicating the content of the second block, or the content of the block header of the second block), $h(x_i)$ indicates the third hash value of the second block.

The value of the RSA accumulator may be obtained based on a third hash value of a modified block in the first blockchain. Therefore, whether a block is modified may be determined based on the value of the RSA accumulator. For example, if a block is modified, the value of the RSA accumulator may reflect a third hash value of the block. If a block is not modified, the value of the RSA accumulator does not reflect a third hash value of the block. For example, if the second block is modified, the value of the RSA accumulator may be updated based on the third hash value of the second block, and the value of the RSA accumulator can reflect the third hash value of the second block. If the first block is not modified, the value of the RSA accumulator does not need to be updated based on a third hash value of the first block, and the value of the RSA accumulator does not reflect the third hash value of the first block. In this case, it can be determined, based on the value of the RSA accumulator, that the second block is modified and the first block is not modified.

A membership witness of a block and a non-membership witness of a block may be provided by using the RSA accumulator. If a block is modified, a membership witness of the block may be provided. If a block is not modified, a non-membership witness of the block may be provided.

For example, the membership witness is $\pi$, and $\pi = d^{1/h(x)}$.

For $x' \notin \{x_i\}$, $\prod_{i=1}^{c} h(x_i)) = 1$. gcd(x) may be understood as a function of x. For example, $x_i$ is content of a modified block, $x'$ indicates content of a block, and if $x' \notin \{x_i\}$, it indicates that the block indicated by x' is not modified. According to the extended Euclidean algorithm, integers a and b may exist, and the following relationship is met:

$$ah(x') + b\prod_{i=1}^{c} h(x_i) = 1 \quad \text{(formula 3)}$$

The left side of the formula 3 is used as exponential coefficients of the generator g, and the following may be obtained:

$$(g^a)^{h(x')} \cdot d^b = g \quad \text{(formula 4)}$$

For example, the non-membership witness includes ($g^a$, b).

For example, if a verification node requests to verify a block from the first node, the first node may send information about the block and a witness to the verification node. Alternatively, if a verification node requests to verify a transaction from the first node, the first node may send information about the transaction and a witness to the verification node. If the block is modified (or a block storing the transaction is modified), the first node further sends a membership witness of the block to the verification node. If the block is not modified (or a block storing the transaction is not modified), the first node further sends a non-membership witness of the block to the verification node. If the first node sends the membership witness $\pi$ of the block to the verification node, the verification node may verify $\pi^{h(x)} = d$. If the equation holds true, verification succeeds, and it indicates that the block is a modified block. Otherwise, verification fails. If the first node sends the non-membership witness ($g^a$, b) of the block to the verification node, the verification node may verify, based on the non-membership witness, whether the formula 4 holds true. If the formula 4 holds true, verification succeeds, and it indicates that the block is a latest block (or a block that is not modified). Otherwise, verification fails. It can be learned that the block can be verified by using the accumulator. The verification process is described later in more detail in the following embodiments.

In this embodiment of this application, an example in which the first node generates the first block is used, that is, an example in which the initiator of the first message generates the first block is used. Actually, the first block may alternatively be generated by another node. For example, S307 is replaced with that each of the t nodes broadcasts a random number. In this case, the t nodes and the first node may receive the t random numbers. If a node in the t nodes has a key of a first hash function, the node may generate the first block. In other words, S308 to S311 may alternatively be performed by another node other than the first node.

S303 to S311 are all optional steps.

In embodiments of this application, an ith block in the first blockchain includes a first field and a second field, the first field may store the first hash value, and the first hash value is obtained according to the first hash function. Same output information can be obtained according to the first hash function under a first condition based on different input information, so that different blocks can have a same first hash value. In this manner, editability of the block is implemented, to implement editability of the blockchain. In addition, the second field may store a second hash value, and the second hash value is obtained according to the second hash function. Same output information cannot be obtained according to the second hash function under the first condition based on different input information. Therefore, the second hash value may be unique for a block, and the block can be uniquely identified by using the second hash value. Therefore, even if a block is modified, a second hash value of the block and a second hash value of a modified block may be used to distinguish the two blocks, to verify each block in the blockchain. It can be learned that, according to the technical solutions in embodiments of this application, not only editability of a blockchain can be implemented, but also a block can be verified.

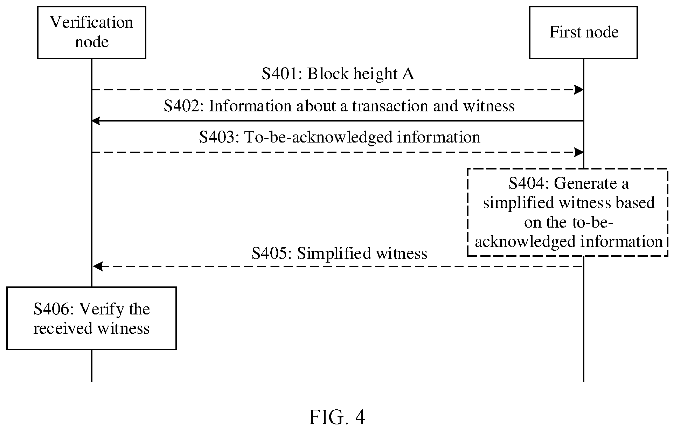

To better describe a block verification process, the following provides a second communication method in embodiments of this application, and a block is verified by using the method. FIG. 4 is a flowchart of the method. The embodiment shown in FIG. 4 and the embodiment shown in FIG. 3 may be applied in combination. For example, for the first blockchain, a block may be modified in the manner provided in the embodiment shown in FIG. 3, and the block may be verified in the manner provided in the embodiment shown in FIG. 4. Alternatively, the embodiment shown in FIG. 3 and the embodiment shown in FIG. 4 may be independent of each other.

S401: A verification node sends a block height A to a first node. Correspondingly, the first node receives the block height A from the verification node. Alternatively, S401 may be replaced with that a verification node sends information A about a transaction A to a first node. Correspondingly, the first node receives the information A about the transaction A from the verification node.

The block height A is a block height of a block or several blocks in a first blockchain. The transaction A is a transaction stored in the first blockchain, and the information A about the transaction A is, for example, a sequence number of the transaction A, or a hash value of the transaction A. In other words, the verification node may request to verify the block, or may request to verify the transaction.

The verification node is, for example, a client or another node. In this embodiment of this application, interaction between the first node and the verification node is used as an example. This is not actually limited thereto. For example, the verification node may alternatively send the block height A to another node storing the first blockchain.

S402: The first node sends the information about the transaction and a witness to the verification node. Correspondingly, the verification node receives the information about the transaction and the witness from the first node.

If the first node receives the block height A, the first node may determine, based on the block height A, a block with the block height A in the first blockchain, so that information about the block may be sent to the verification node as the information about the transaction. For example, the information about the block includes content stored in the block. Alternatively, if the first node receives the information A about the transaction A, the first node may send information B about the transaction A to the verification node as the information about the transaction. For example, the information B about the transaction A includes content of the transaction A.

In addition, if the first node receives the block height A, the first node may determine, based on the block height A, a block with the block height A in the first blockchain. If there is only one block with the block height A in the first blockchain, it indicates that the block is not modified. In this case, the first node sends both information about the block and a non-membership witness of the block to the verification node.

Alternatively, if there are a plurality of blocks with the block height A in the first blockchain, the first node may separately determine whether each of the plurality of blocks is modified. For a modified block, the first node sends both information about the block and a membership witness of the block to the verification node. For a block that is not modified, the first node sends both information about the block and a non-membership witness of the block to the verification node. For example, if the block height A is a block height (which is also a block height of a second block) of a first block, the first node may determine the first block and the second block. For descriptions of the first block and the second block, refer to the embodiment shown in FIG. 3. If the second block is a modified block, the first node may send information about the second block and a membership witness of the second block to the verification node. If the first block is a block that is not modified, the first node may send information about the first block and a non-membership witness of the first block to the verification node. In this case, the information about the transaction includes the information about the first block and the information about the second block, and the witness includes the non-membership witness of the first block and the membership witness of the second block.

If the first node receives the information A about the transaction A, the first node may determine the block storing the transaction A. For example, if the transaction A is the second transaction in the embodiment shown in FIG. 3, the first node may determine the second block storing a second transaction. The first node may send information about the second transaction and the membership witness of the second block to the verification node. For another example, if the transaction A is the first transaction in the embodiment shown in FIG. 3, the first node may determine the first block storing the first transaction. The first node may send information about the first transaction and the non-membership witness of the first block to the verification node.

The membership witness of the block may be used to verify, with reference to an accumulator (in other words, with reference to a latest value of the accumulator), whether the block is modified. The non-membership witness of the block may be used to verify, with reference to the accumulator (in other words, with reference to the latest value of the accumulator), whether the block is a latest block, or verify whether the block is not modified.

The witness sent by the first node may be a complete witness, for example, a complete membership witness and/or non-membership witness. Alternatively, optionally, to simplify a verification process of the verification node, the witness sent by the first node may alternatively be a simplified witness, and the simplified witness is obtained by simplifying a complete witness. Optionally, the method may further include S403 to S405. In other words, after S402 is performed, S406 may be directly performed, and S403 to S405 are not performed. Alternatively, after S402 is performed, S403 to S405 may be performed, and then S406 is performed.

S403: The verification node sends to-be-acknowledged information to the first node. Correspondingly, the first node receives to-be-acknowledged information from the verification node.

For example, the to-be-acknowledged information is a challenge (challenge), and the challenge is implemented by a random number. The random number may be represented as 1, a value range of 1 is $\{0,1\}^{\lambda}$, and $\lambda$ is a Lagrange coefficient.

S404: The first node generates the simplified witness based on the to-be-acknowledged information.

For example, if a witness to be sent by the first node includes a membership witness, the first node generates a simplified membership witness. For another example, if a witness to be sent by the first node includes a non-membership witness, the first node generates a simplified non-membership witness.

For example, the simplified witness includes $(e_1, e_2)$ and $(Q_1, Q_2)$, and one manner of obtaining the simplified witness is as follows:

$$h(B)=l\times q_1+e_1 \quad \text{(formula 5)}$$

$$b=l\times q_2+e_2 \quad \text{(formula 6)}$$

$$Q_1=(g^a)^{q_1} \quad \text{(formula 7)}$$

$$Q_2=d^{q_2} \quad \text{(formula 8)}$$

h(B) is a hash value of a to-be-verified block (for example, a third hash value of the to-be-verified block). For parameters such as $g^a$ and d, refer to the descriptions about the accumulator in the embodiment shown in FIG. 3. The first node can obtain the simplified witness according to the formula 5 to the formula 8.

S405: The first node sends the simplified witness to the verification node. Correspondingly, the verification node receives the simplified witness from the first node.

S406: The verification node verifies the received witness.

For example, if S403 to S405 are not performed, the verification node receives a complete witness, where the complete witness includes a complete membership witness and/or a complete non-membership witness. In this case, the verification node verifies the complete witness. Alternatively, if S403 to S405 are performed, the verification node may verify the simplified witness, where the simplified witness includes a simplified membership witness and/or a simplified non-membership witness. A process in which the verification node verifies the membership witness or the non-membership witness is described in the embodiment shown in FIG. 3. Details are not described again. By using the accumulator, a block in the blockchain can be quickly verified, and there is no need to traverse the blockchain to search for a modification record of the block (that is, search for a log that stores the modification record), to improve efficiency of verifying the block.

S401, and S403 to S405 are all optional steps.

In addition, in this embodiment of this application, in addition to verification of a block, the entire blockchain may further be verified. The following provides descriptions by using an example in which the first node verifies the first blockchain and the first blockchain is in the structure shown in FIG. 2.

During verification, the first blockchain may be traversed forward starting from a newly generated block in the first blockchain, until a genesis block in the first blockchain is verified. The genesis block in the blockchain is, for example, a block that is first generated in the blockchain. FIG. 2 is used as an example. For example, the block 1 is the genesis block, and the block 3 is the newly generated block.

The first node first verifies whether the block 3 is valid. If the block 3 is valid, the first node determines all blocks with a previous block height based on the first field of the block 3. For example, the block height of the block 3 is H+1, the previous block height is H, and all blocks corresponding to H include the block 2 and the block 4. The first node separately verifies whether the block 2 and the block 4 are valid. Because the block 2 is modified (the block 4 is obtained through modification), the first node determines, through verification, that the block 2 is invalid and the block 4 is valid. The first node continues to traverse forward, and determines all blocks with the previous block height based on the first field of the block 4. The previous block height is H-1, all blocks corresponding to H-1 include the block 1, and the first node verifies whether the block 1 is valid. The block 1 is the genesis block. Then, a verification process of the first blockchain ends. It can be learned that, according to the solutions in embodiments of this application, not only a single block can be verified, but also the entire blockchain can be verified.

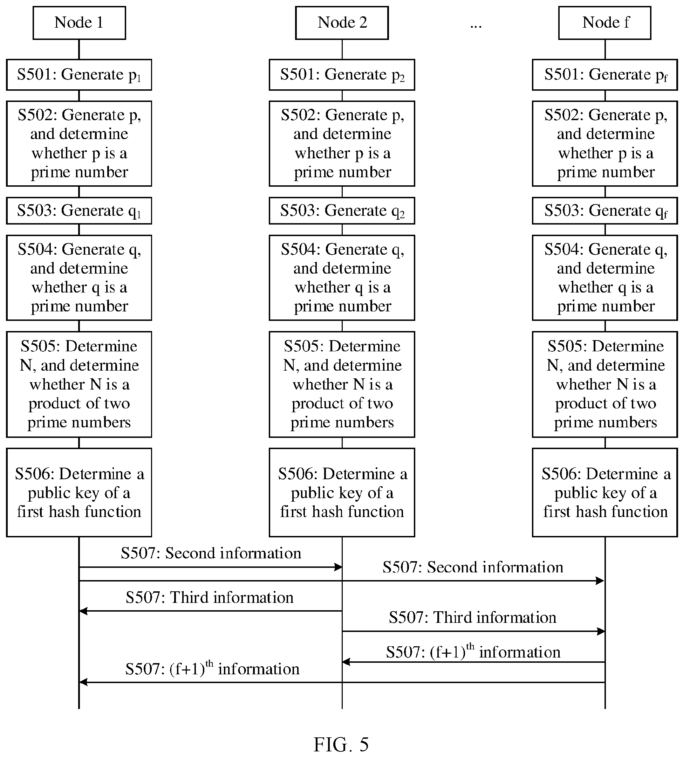

The first hash function is described above. A public key and a private key need to be set for the first hash function, to apply the first hash function. The following describes a third communication method provided in embodiments of this application. According to the method, a key may be generated for the first hash function, and the key includes the public key and the private key. FIG. 5 is a flowchart of the method. The method provided in the embodiment shown in FIG. 5 and the method provided in the embodiment shown in FIG. 3 may be applied in combination. For example, a node in f nodes may be the first node. Alternatively, the method provided in the embodiment shown in FIG. 5 and the method provided in the embodiment shown in FIG. 3 may be independent of each other. The method provided in the embodiment shown in FIG. 5 and the method provided in the embodiment shown in FIG. 4 may be applied in combination. Alternatively, the method provided in the embodiment shown in FIG. 5 and the method provided in the embodiment shown in FIG. 4 may be independent of each other. Optionally, the embodiment shown in FIG. 3, the embodiment shown in FIG. 4, and the embodiment shown in FIG. 5 may be applied in combination. For example, for the first blockchain, the key of the first hash function may be generated by using the method provided in the embodiment shown in FIG. 5, a block in the first blockchain is modified by using the method provided in the embodiment shown in FIG. 3, and the block in the first blockchain is verified by using the method provided in the embodiment shown in FIG. 4.

S501: The f nodes separately generate {$p_1$, $p_2$, ..., $p_f$}.

For example, the f nodes are f blockchain nodes. For example, the f blockchain nodes are all or some nodes included in the foregoing blockchain system. For example, the f nodes are nodes in the first blockchain, that is, all the f nodes store the first blockchain. For example, the f nodes may include the t nodes in the embodiment shown in FIG. 3.

That the f nodes separately generate {$p_1$, $p_2$, ..., $p_f$} means that one node generates a number, for example, a 1st node (a node 1 in FIG. 5) in the f nodes generates $p_1$, a 2nd node (a node 2 in FIG. 5) in the f nodes generates $p_2$, and an fth node (a node f in FIG. 5) in the f nodes generates $p_f$, where $p_1$, $p_2$, ..., and $p_f$ are prime numbers.

S502: The f nodes generate p, and determine whether p is a prime number, where $p=p_1 + p_2 + \cdots + p_f$.

For example, after the f nodes separately generate {$p_1$, $p_2$, ..., $p_f$}, each of the f nodes may verify whether p is a prime number by using a cryptography-related method. In other words, although each node can verify whether p is a prime number, for a node i, only $p_i$ generated by the node is obtained, but a value of p generated by another node is not known, and each node may not know a specific value of p that is verified.

S503: The f nodes separately generate {$q_1$, $q_2$, ..., $q_f$}.

For example, the f nodes are f blockchain nodes. For example, the f blockchain nodes are all or some nodes included in the foregoing blockchain system. For example, the f nodes are nodes in the first blockchain, that is, all the f nodes store the first blockchain. That the f nodes separately generate {$q_1$, $q_2$, ..., $q_f$} means that one node generates a number, for example, the 1st node in the f nodes generates $q_1$, the 2nd node in the f nodes generates $q_2$, and the fth node in the f nodes generates $q_f$, where $q_1$, $q_2$, ..., and $q_f$ are prime numbers.

S504: The f nodes generate q, and determine whether q is a prime number, where $q=q_1 + q_2 + \cdots + q_f$.

For example, after the f nodes separately generate {$q_1$, $q_2$, ..., $q_f$}, each of the f nodes may verify whether q is a prime number by using a cryptography-related method. In other words, although each node can verify whether q is a prime number, for the node i, only $q_i$ generated by the node is obtained, but a value of q generated by another node is not known, and each node may not know a specific value of q that is verified.

S505: The f nodes determine N, and determine whether N is a product of two prime numbers.

If both p and q are prime numbers, S505 may be performed. Otherwise, if p is not a prime number, S501 and S502 are repeatedly performed until p is a prime number. Alternatively, if q is not a prime number, S503 and S504 are repeatedly performed until q is a prime number.

For example, N=p×q. If N is a product of two prime numbers, S506 may continue to be performed. If N is not a product of two prime numbers, S501 to S505 are repeated until N is the product of two prime numbers.

S506: The f nodes determine the public key of the first hash function. For example, the f nodes may determine the public key of the first hash function through negotiation or in another manner.

In addition, the f nodes generate $d_1$, $d_2$, ..., and $d_f$, and $d_i$ is considered as a private key share possessed by the ith node in the f nodes, that is, each of the f nodes may generate a private key share. The 1st node in the f nodes generates $d_1$, and $d_1$ is a private key share generated by the 1st node in the f nodes. The 2nd node in the f nodes generates $d_2$, and $d_2$ is a private key share generated by the 2nd node in the f nodes. The rest may be deduced by analogy.

For example, $D=d_1 + d_2 + \cdots + d_f$, and $D=e^{-1}$ mod $\psi(N)$ needs to be met. The verification process may be jointly implemented by the f nodes. e indicates the public key of the first hash function, N is obtained in S505, and D may indicate the private key of the first hash function.

S507: The f nodes share private key shares separately generated by the f nodes.

For ease of description, the following is described by using an example in which one of the f nodes is the foregoing first node. For example, for the first node, a generated private key share is referred to as a first private key share. For example, the first private key share is a private key share 1, a private key share 2, or a private key share f in FIG. 5, or may be another private key share that is not shown in FIG. 5. In this case, the first node may send f-1 pieces of first information to f-1 nodes other than the first node in the f nodes, and each of the f-1 pieces of first information may indicate the first private key share. For example, the first node may generate a polynomial based on the first private key share. For example, the first node is the 1st node in the f nodes, and the polynomial is

$$f_1(x) = d_1 + \sum_{j=1}^{f-1} a_{1j} x^j$$, where $d_1$ indicates the first private key share, and $a_{1j}$ indicates a constant. If the first node needs to send first information to a node in the f nodes, the first node substitutes an index of the node as a value of x into the polynomial, to obtain a specific value. The first node sends the value to the node, and the value may be the first information sent to the node. For example, if the first node needs to send first information to the fth node in the f nodes, an obtained value is

$$f_1(f) = d_1 + \sum_{j=1}^{f-1} a_{1j} f^j$$, and the first node may send the value to the fth node. Because first information sent by the first node to different nodes may be different, the first node may separately send the f-1 pieces of first information in a unicast manner.

For another node other than the first node in the f nodes, a sharing process is also similar. For example, for the 2nd node in the f nodes, a polynomial may be generated. For example, the polynomial is

$$f_2(x) = d_2 + \sum_{j=1}^{f-1} a_{2j} x^j$$, where $d_2$ indicates a private key share generated by the 2nd node, and $a_{2j}$ indicates a constant. If the 2nd node needs to share the private key share with a node in the f nodes, the 2nd node substitutes an index of the node as a value of x into the polynomial, to obtain a specific value. The 2nd node sends the value to the node, and the value may be the private key share shared with the node. For example, if the 2nd node needs to share the private key share with the fth node in the f nodes, an obtained value is

$$f_2(f) = \mathrm{d}_2 + \sum_{j=1}^{f-1} a_{2j} \, f^j$$ , and the 2nd node may send the value to the fth node. Because information, used to share the private key share, that is sent by the 2nd node to different nodes may be different, the 2nd node may separately send, in a unicast manner, f-1 pieces of information used to share the private key share. For another example, for the fth node in the f nodes, a polynomial may be generated. For example, the polynomial is

$$f_f(x) = \mathrm{d}_2 + \sum_{j=1}^{f-1} a_{fj} \, x^j$$ , where $d_f$ indicates a private key share generated by the fth node, and $a_{fj}$ indicates a constant. If the fth node needs to share the private key share with a node in the f nodes, the fth node substitutes an index of the node as a value of x into the polynomial, to obtain a specific value. The fth node sends the value to the node, and the value may be the private key share shared with the node. Because information, used to share the private key share, that is sent by the fth node to different nodes may be different, the fth node may separately send, in a unicast manner, f-1 pieces of information used to share the private key share. It is equivalent to that the node i in the f nodes may send $f_i$($x_j$) to a node j in the f nodes.

In conclusion, for example, for the jth node in the f nodes, f-1 pieces of (j+1)th information may be sent to f-1 nodes other than the jth node in the f nodes. In this case, the first node may receive the (j+1)th information, where j is an integer ranging from 1 to f-1. For example, in FIG. 5, the 1st node in the f nodes may send f-1 pieces of second information, where the second information may indicate the private key share generated by the 1st node. The 2nd node in the f nodes may send f-1 pieces of third information, where the third information may indicate the private key share generated by the 2nd node. The fth node in the f nodes may send f-1 pieces of (f+1)th information, where the (f+1)th information may indicate the private key share generated by the fth node. The rest may be deduced by analogy. The first node may receive one piece of second information, one piece of third information, one piece of fourth information, and the rest may be deduced by analogy.

For example, the node i in the f nodes may send $f_i$($x_j$) to the node j in the f nodes. In this case, for the jth node in the f nodes, one piece of restoration information may be obtained based on information received from the f-1 nodes and a private key share possessed by the jth node. The restoration information may be used to restore the private key of the first hash function. For example, restoration information obtained by the first node in the f nodes is referred to as first restoration information, and restoration information obtained by the second node in the f nodes is referred to as third restoration information. For example, the f nodes possess f pieces of restoration information in total (one node possesses one piece of restoration information), the private key of the first hash function may be obtained through restoration based on the f pieces of restoration information. For example, for the node j in the f nodes, $f(x_j) = \sum_{i=1}^{f} f_i(x_j)$ may be possessed, and $f(x_j)$ may be used as one piece of restoration information. If the restoration information of the f nodes is integrated, $f(x) = \mathrm{D} + \sum_{j=1}^{f-1} a_j x^j$ may be obtained, where D is the private key of the first hash function. It can be learned that the private key of the first hash function may be obtained by integrating the f pieces of restoration information of the f nodes.

If the private key of the first hash function is completely possessed by a node, the node has a right, for example, a right to allocate the private key. Consequently, permission of the node is excessively large, and the node may be referred to as a central node of blockchain nodes, which violates an idea of blockchain decentralization. Therefore, in this embodiment of this application, each of the f nodes possesses only a portion of the private key of the first hash function, and the private key of the first hash function can be restored only by combining f portions possessed by the f nodes. This avoids a case in which the private key of the first hash function is completely possessed by a node, and implements an idea of blockchain decentralization.

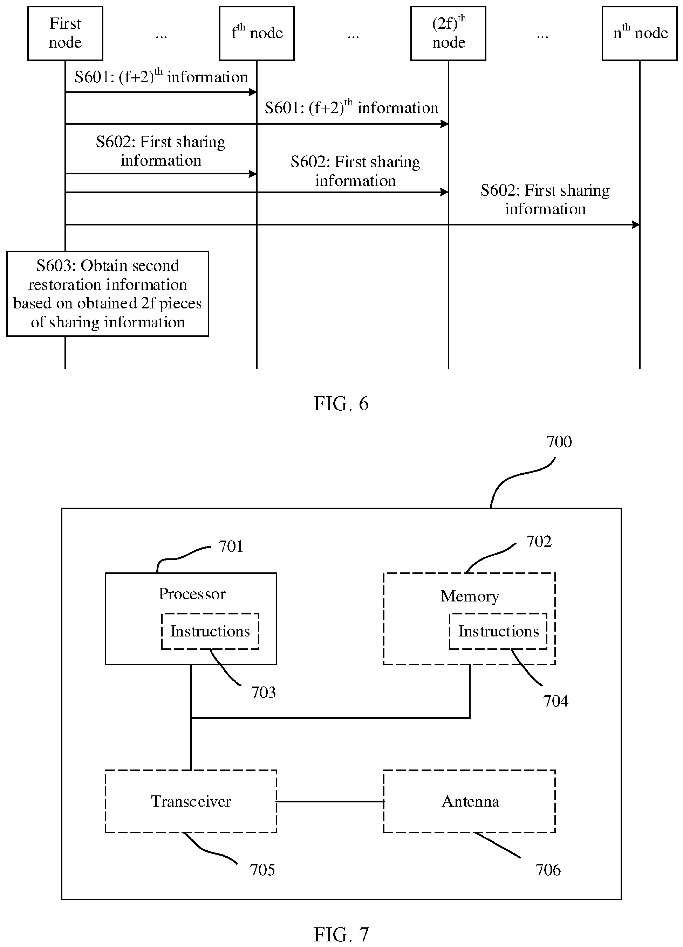

According to the solution provided in the embodiment shown in FIG. 5, sharing of the private key of the first hash function is implemented. The f nodes are not necessarily unchangeable. For example, a node may exit, and a node may join. In consideration of the cases, the private key of the first hash function may be periodically updated, in other words, the key of the first hash function may further be re-shared. The following describes a fourth communication method provided in embodiments of this application. According to the method, re-sharing of the private key of the first hash function is implemented. For ease of description, the first node is used as a description node for description. For example, the first node is one of the f nodes in the embodiment shown in FIG. 5. FIG. 6 is a flowchart of the method.

S601: The first node sends 2f-1 pieces of (f+2)th information to 2f-1 nodes. Correspondingly, each of the 2f-1 nodes receives the (f+2)th information from the first node. FIG. 6 shows a first node, an fth node, a (2f)th node, and an nth node.

The 2f-1 nodes may include the f-1 nodes, and each piece of (f+2)th information indicates first restoration information. The first restoration information is restoration information obtained by the first node. For a description of the first restoration information, refer to the embodiment shown in FIG. 5.

The (f+2)th information may be implemented in different manners. The following uses an example for description.

1. First manner

For example, if the first node is a 1st node in the f nodes, the first node possesses ($x_1$, $s_1$), where $s_1$=f($x_1$),

and $s_1$ is restoration information obtained by using the embodiment shown in FIG. 5. For another example, if the first node is an $f^{th}$ node in the f nodes, the first node possesses $(x_f, s_f)$, where $s_f = f(x_f)$, and $s_f$ is restoration information obtained by using the embodiment shown in FIG. 5.

The first node generates a polynomial. For example, the first node is the $1^{st}$ node in the f nodes, and the polynomial is represented as

$$Q(x_1, y) = s_1 + \sum_{i=1}^{2f-1} b_{1i} y^i$$

, where $b_{1i}$ indicates a constant. If the first node needs to share a first private key share with a node in 2f nodes, the first node substitutes an index of the node as a value of y into the polynomial, to obtain a specific value. The first node sends the value to the node, and the value may be information, for example, the $(f+2)^{th}$ information, that is sent to the node and that is used to share the first restoration information. For example, if the first node needs to share the first restoration information with the $f^{th}$ node in the f nodes, an obtained value is

$$Q(x_1, x_f) = s_1 + \sum_{i=1}^{2f-1} b_{1i} x_f{}^i$$

, and the first node may send the value to the $f^{th}$ node. Because information that is sent to different nodes by the first node and that is used to share the first restoration information may be different, the first node may separately send the 2f-1 pieces of $(f+2)^{th}$ information in a unicast manner.

For another example, the first node is the $f^{th}$ node in the f nodes, and the polynomial is represented as

$$Q(x_f, y) = s_f + \sum_{i=1}^{2f-1} b_{fi} y^i$$

, where $b_{fi}$ indicates a constant. If the first node needs to share the first restoration information with a node in the 2f nodes, the first node substitutes an index of the node as a value of y into the polynomial, to obtain a specific value. The first node sends the value to the node. The first node may send the value to the $f^{th}$ node. Because information that is sent to different nodes by the first node and that is used to share the first restoration information may be different, the first node may separately send, in a unicast manner, 2f-1 pieces of information used to share the first restoration information.

The f nodes all use a similar sharing manner. In this case, for each of the 2f nodes, f pieces of information, from the f nodes, that are used to share a private key share may be obtained (for a node that belongs to the f nodes in the 2f nodes, f-1 pieces of information used to share a private key share may be received from the f-1 nodes, and the node further generates one piece of information used to share a private key share; and for a node that does not belong to the f nodes in the 2f nodes, f pieces of information used to share a private key share may be received from the f nodes), and each of the 2f nodes may obtain a polynomial. The polynomial is obtained based on the f pieces of information used to share a private key share. For example, for a $1^{st}$ node in the 2f nodes, an obtained polynomial is $Q(x, y_1)$. For a $2^{nd}$ node in the 2f nodes, an obtained polynomial is $Q(x, y_2)$. The rest may be deduced by analogy. For a $(2f)^{th}$ node in the 2f nodes, an obtained polynomial is $Q(x, y_{2f})$.

2. Second manner

For example, the first node generates a first polynomial, and sends 2f-1 pieces of information to the 2f-1 nodes according to the first polynomial. The first node generates a second polynomial, and sends the 2f-1 pieces of information to the 2f-1 nodes according to the second polynomial. For example, a first polynomial generated by an $i^{th}$ node in the f nodes is represented as $Q_{ij}$, and information (information obtained according to the first polynomial) sent by the $i^{th}$ node to a $j^{th}$ node may be represented as $Q(x_i, y_j)$. A second polynomial generated by the $i^{th}$ node in the f nodes is represented as $P_{ij}$. For example, if the $i^{th}$ node is the $1^{st}$ node in the f nodes,

$$P_{ij} = P_1(x) = \sum_{i=1}^{f-1} b'_{1i} x^i$$

. For a node in the 2f-1 nodes, the first node may replace x in the second polynomial with an index of the node, to obtain $P_1(x)$, namely, information to be sent to the node. For another example, if the $i^{th}$ node is the $f^{th}$ node in the f nodes,

$$P_{ij} = P_f(x) = \sum_{i=1}^{f-1} b'_{fi} x^i$$

. For a node in the 2f-1 nodes, the first node may replace x in the second polynomial with an index of the node, to obtain $P_f(x)$, namely, information to be sent to the node.

Each of the f nodes sends information to the 2f nodes in a similar manner. Therefore, for each of the 2f nodes, f pieces of information generated according to the first polynomial may be obtained. Therefore, for a $j^{th}$ node in the 2f nodes, first restoration sub-information may be calculated by using the f pieces of information generated according to the first polynomial. For example, the first restoration sub-information is represented as $Q(x, y_j)$, where j is an integer ranging from 1 to 2f. In addition, for each of the 2f nodes, f pieces of information generated according to the second polynomial may further be obtained. Therefore, for the $j^{th}$ node in the 2f nodes,

$$P(x_j) = \sum_{i=1}^{f} P_i(x_j)$$

may be calculated by using the f pieces of information generated according to the second polynomial, where j is an integer ranging from 1 to 2f.

In this case, each of the 2f nodes may generate a third polynomial through calculation. For example, a $1^{st}$ node in the 2f nodes generates a third polynomial

$$R_1(y) = P(x_1) + \sum_{i=1}^{2f-1} a'_{1i} y^i$$

through calculation, an $f^{th}$ node in the 2f nodes generates a third polynomial

$$R_f(y) = P(x_f) + \sum_{i=1}^{2f-1} a'_{fi} y^i$$

through calculation, and a $(2f)^{th}$ node in the 2f nodes generates a third polynomial

$$R_{2f}(y) = P(x_{2f}) + \sum_{i=1}^{2f-1} a'_{(2f)i} y^i$$

through calculation.

Each of the 2f nodes may send information to remaining 2f-1 nodes in the 2f nodes. For example, a $k^{th}$ node in the 2f nodes may send 2f-1 pieces of $(f+k+1)^{th}$ information to remaining 2f-1 nodes other than the $k^{th}$ node in the 2f nodes, where the $(f+k+1)^{th}$ information is determined, for example, according to the third polynomial. For example, for the $k^{th}$ node in the 2f nodes, if information needs to be sent to the $j^{th}$ node in the 2f nodes, an index (namely, j) of the $j^{th}$ node is substituted into a third polynomial generated by the $k^{th}$ node, to obtain $R_k(y_j)$, where $R_k(y_j)$ is $(f+k+1)^{th}$ information sent by the $k^{th}$ node to the $j^{th}$ node. Each of the 2f nodes sends information to remaining 2f-1 nodes in the 2f nodes in a similar manner. Therefore, for each of the 2f nodes, 2f pieces of information may be obtained. For each of the 2f nodes, second restoration sub-information may be obtained based on the obtained 2f pieces of information. For example, for the $j^{th}$ node in the 2f nodes, the obtained second restoration sub-information is represented as $R(x, y_j)$, where R(0, 0)=0.

For each of the 2f nodes, a fourth polynomial may further be determined based on the first restoration sub-information and the second restoration sub-information. For example, the fourth polynomial is represented as $Q'_x$. For example, the $1^{st}$ node in the 2f nodes generates a fourth polynomial $Q'(x, y_1) = q(x, y_1) + R(x, y_1)$, the $f^{th}$ node in the 2f nodes generates a fourth polynomial $Q'(x, y_f) = q(x, y_f) + R(x, y_f)$, and the $(2f)^{th}$ node in the 2f nodes generates a fourth polynomial $Q'(x, y_{2f}) = q(x, y_{2f}) + R(x, y_{2f})$. The rest may be deduced by analogy.

S602: The first node sends n pieces of first sharing information to n nodes. Each of the n nodes receives the first sharing information from the first node. The n nodes include, for example, the 2f nodes.

1. First manner

The following continues to be performed based on the foregoing first manner. If each of the 2f nodes obtains a polynomial, each of the 2f nodes may send sharing information to the n nodes, and the sharing information is obtained according to the polynomial. For example, for the first node in the 2f nodes, the first node is an $i^{th}$ node in the 2f nodes, a polynomial obtained by the first node is Q(x, $y_i$). The first node needs to calculate $Q(x_j, y_i)$ and send $Q(x_j, y_i)$ to a $j^{th}$ node in the n nodes, where $Q(x_j, y_i)$ is the first sharing information. For example, the first node sends $Q(x_j, y_3)$ to a $3^{rd}$ node in the n nodes, and sends $Q(x_j, y_4)$ to a $4^{th}$ node in the n nodes. Sharing manners used by the 2f nodes are similar. Therefore, each of the n nodes may obtain 2f pieces of sharing information. For example, the first node may receive $(f+k+1)^{th}$ information from a $k^{th}$ node in the 2f-1 nodes. The $(f+k+1)^{th}$ information is sharing information of the $k^{th}$ node, where k is an integer ranging from 1 to 2f-1. For each of the n nodes, the obtained 2f pieces of sharing information are represented as $((x_j, y_1), \dots, (x_j, y_{2f}))$.

2. Second manner

The following continues to be performed based on the foregoing second manner. If each of the 2f nodes has determined the fourth polynomial, each of the 2f nodes may send sharing information to the n nodes according to the fourth polynomial. For example, for the first node in the 2f nodes, the first node is an $i^{th}$ node in the 2f nodes, sharing information sent by the first node to a $j^{th}$ node in the 2f nodes may be represented as $Q'(x_j, y_i)$. Each of the n nodes may obtain 2f pieces of sharing information.

S603: The first node obtains second restoration information based on the obtained information.

For example, the first node is one of the 2f nodes. In this case, the first node receives 2f-1 pieces of sharing information from the 2f-1 nodes, the first node further generates one piece of sharing information, and the first node obtains the 2f pieces of sharing information in total. Alternatively, the first node is one of the n nodes but is not one of the 2f nodes. In this case, the first node receives the 2f pieces of sharing information from the 2f nodes. The first node may obtain the second restoration information based on the 2f pieces of sharing information.

The following continues to be performed based on the foregoing first manner. For example, the first node is a $1^{st}$ node in the n nodes, and the second restoration information obtained by the first node may be represented as Q($x_1$, y). For another example, the first node is a $2^{nd}$ node in the n nodes, and the second restoration information obtained by the first node may be represented as Q($x_2$, y). For another example, the first node is an $(f+1)^{th}$ node in the n nodes, and the second restoration information obtained by the first node may be represented as Q($x_{f+1}$, y). For another example, the first node is a $(2f)^{th}$ node in the n nodes, and the second restoration information obtained by the first node may be represented as Q($x_{2f}$, y). The rest may be deduced by analogy. For another example, the first node is an $n^{th}$ node in the n nodes, and the second restoration information obtained by the first node may be represented as Q($x_n$, y).

The following continues to be performed based on the foregoing second manner. For example, the first node is the $j^{th}$ node in the n nodes, the second restoration information obtained by the first node may be represented as $Q'(x_j, y)$.

Each node in the n nodes may obtain corresponding restoration information in a similar manner. For example, a second node in the n nodes may obtain fourth restoration information. n pieces of restoration information possessed by N nodes may be used to restore the private key of the first hash function. For example, the private key D of the first hash function may be obtained by integrating the f pieces of restoration information possessed by the f nodes in the n nodes.

To prevent changing of the f nodes, in this embodiment of this application, the private key may be updated. Instead, the n nodes possess private key shares, so that the private key of the first hash function can be restored by combining the f nodes in the n nodes. In addition, the 2f nodes participate in a private key re-sharing process, to resist a behavior of stealing the private key by 2f-1 malicious nodes. Therefore, security of a private key sharing process is high.

A communication apparatus provided in embodiments of this application is described according to the foregoing method embodiments.

An embodiment of this application provides a communication apparatus. The communication apparatus includes, for example, a processing unit and a transceiver unit (or referred to as a communication unit). The processing unit may be configured to implement a processing function of the first node in any one of embodiments shown in FIG. 3 to FIG. 6. The transceiver unit may be configured to implement all or some of transceiver functions of the first node in any one of embodiments shown in FIG. 3 to FIG. 6. Alternatively, the processing unit may be configured to implement a processing function implemented by the second node in any one of embodiments shown in FIG. 3 to FIG. 6, and the transceiver unit may be configured to implement all or some transceiver functions of the second node in any one of embodiments shown in FIG. 3 to FIG. 6.

Optionally, the processing unit and/or the transceiver unit may be implemented by using a virtual module. For example, the processing unit may be implemented by using a software functional unit or a virtual apparatus, and the transceiver unit may be implemented by using a software functional unit or a virtual apparatus. Alternatively, the processing unit and/or the transceiver unit may be implemented by using a physical apparatus (for example, a circuit system and/or a processor). The following describes a case in which the processing unit and the transceiver unit are implemented by using a physical apparatus.

FIG. 7 is a schematic diagram of a structure of a communication apparatus according to an embodiment of this application. The communication apparatus 700 may be the first node, a circuit system of the first node, a circuit system that can be used in the first node, or the like in any one of embodiments shown in FIG. 3 to FIG. 6, and is configured to implement the method corresponding to the first node in the foregoing method embodiments. Alternatively, the communication apparatus 700 may be the second node, a circuit system of the second node, a circuit system that can be used in the second node, or the like in any one of embodiments shown in FIG. 3 to FIG. 6, and is configured to implement the method corresponding to the second node in the foregoing method embodiments. For a specific function, refer to the descriptions in the method embodiments. For example, a circuit system is a chip system.

The communication apparatus 700 includes one or more processors 701. The processor 701 may implement a specific control function. The processor 701 may be a general-purpose processor, a special-purpose processor, or the like. For example, the processor 701 includes a baseband processor and a central processing unit. The baseband processor may be configured to process a communication protocol and communication data. The central processing unit may be configured to control the communication apparatus 700, perform a software program, and/or process data. Different processors may be independent components, or may be disposed in one or more processing circuits, for example, integrated in one or more application-specific integrated circuits.

Optionally, the communication apparatus 700 includes one or more memories 702, configured to store instructions 704. The instructions 704 may be run on the processor, to enable the communication apparatus 700 to perform the method described in the foregoing method embodiments. Optionally, the memory 702 may also store data. The processor and the memory may be separately disposed, or may be integrated together.

Optionally, the communication apparatus 700 may store instructions 703 (sometimes referred to as code or a program), and the instructions 703 may be run on the processor, to enable the communication apparatus 700 to perform the method described in the foregoing embodiments. The processor 701 may store data.

For example, the processing unit is implemented by using one or more processors 701, or the processing unit is implemented by using one or more processors 701 and one or more memories 702, or the processing unit is implemented by using one or more processors 701, one or more memories 702, and the instructions 703.

Optionally, the communication apparatus 700 may further include a transceiver 705 and an antenna 706. The transceiver 705 may be referred to as a transceiver unit, a transceiver device, a transceiver circuit, a transceiver, an input/output interface, or the like, and is configured to implement a transceiver function of the communication apparatus 700 through the antenna 706. For example, the transceiver unit is implemented by using the transceiver 705, or the transceiver unit is implemented by using the transceiver 705 and the antenna 706.

Optionally, the communication apparatus 700 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that in some embodiments, the communication apparatus 700 may include more or fewer components, or some components may be integrated, or some components may be split. These components may be implemented by hardware, software, or a combination of software and hardware.

The processor 701 and the transceiver 705 described in this embodiment of this application may be implemented on an integrated circuit (integrated circuit, IC), an analog IC, a radio frequency integrated circuit (radio frequency integrated circuit, RFIC), a hybrid signal IC, an application-specific integrated circuit (application-specific integrated circuit, ASIC), a printed circuit board (printed circuit board, PCB), an electronic device or the like. The communication apparatus described in this specification may be an independent device (for example, an independent integrated circuit or a mobile phone), or may be a part (for example, a module that may be embedded in another device) of a large device. For details, refer to the descriptions about the first node and the second node in the foregoing embodiments. Details are not described herein again.

All or some of the technical solutions in embodiments of this application may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a special-purpose computer, a computer network, an access network device, a terminal device, an AI node, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like. In embodiments of this application, when there is no logical conflict, embodiments may be mutually referenced.

The foregoing descriptions are merely specific implementations of embodiments of this application. However, the scope of embodiments of this application is not limited thereto. Any change or replacement readily figured out by a person skilled in the art within the technical scope disclosed in embodiments of this application shall fall within the scope of embodiments of this application. Therefore, the protection scope of embodiments of this application shall be subject to the protection scope of the claims.

**Claims**

1. A communication method, comprising:

    determining (S301), by a first node, a first message; and
    sending (S302), by the first node, the first message, wherein the first message comprises at least one of request information and information about a first transaction, the request information is used to request to modify a second transaction, the first transaction is a modified second transaction, the second transaction is stored in a first blockchain, the first blockchain comprises N blocks, an $i^{th}$ block in the first blockchain comprises a first field and a second field, the second field is used to store a second preset value or a second hash value of a previous block whose block height is the same as a block height of the $i^{th}$ block, and when i=1, the first field is used to store a first preset value, or when i is greater than 1 and less than or equal to N, the first field is used to store a first hash value of a previous block whose block height is different from the block height of the $i^{th}$ block, wherein
    i is an integer ranging from 1 to N, the first hash value is a hash value obtained according to a first hash function, same output information can be obtained according to the first hash function under a first condition based on different input information, the second hash value is a hash value obtained according to a second hash function, and same output information cannot be obtained according to the second hash function under the first condition based on different input information,
    wherein the method further comprises:

        receiving (S307), by the first node, at least one random number from at least one node, wherein one of the at least one node corresponds to one of the at least one random number, and both the first node and the at least one node are nodes in the first blockchain;
        determining (S308), by the first node, a first random number based on the at least one random number, wherein the first random number is used to obtain a first hash value of a block storing the first transaction; and
        sending (S310), by the first node, a second message, wherein the second message comprises the first random number,
        wherein the method further comprises:

generating (S309), by the first node, a first block based on the first random number, wherein the first block is used to store the first transaction, the first block is a modified second block, the second block is used to store the second transaction, a first hash value of the second block is the same as a first hash value of the first block, and the second message comprises information about the first block,

**characterized in that** the method further comprises:

updating (S311), by the first node, an accumulator based on a third hash value of the second block, wherein an updated value of the accumulator is stored in a third block, the third block is a block, in the first blockchain, that corresponds to a latest block height, and the third hash value is a hash value obtained according to a third hash function.

2. The method according to claim 1, wherein the first hash function is a chameleon hash function, and the second hash function is a non-chameleon hash function.

3. The method according to claim 1 or 2, wherein the method further comprises:
sending, by the first node, transaction information and a witness to a verification node, wherein the transaction information is the information about the first transaction, and the witness is a non-membership witness of the first block, or the transaction information is information about the second transaction, and the witness is a membership witness of the second block, wherein the first block is used to store the first transaction, the non-membership witness is used to verify, with reference to the accumulator, whether the first block is a latest block obtained through modification, and the membership witness is used to verify, with reference to the accumulator, whether the second block is modified.

4. The method according to claim 3, wherein the method further comprises:

receiving, by the first node, to-be-acknowledged information from the verification node;
generating, by the first node, a simplified witness based on the to-be-acknowledged information, wherein the simplified witness is obtained by simplifying the witness; and
sending, by the first node, the simplified witness to the verification node.

5. A communication method, comprising:

receiving (S302), by a second node, a first message from a first node, wherein the first message comprises at least one of request information and information about a first transaction, the request information is used to request to modify a second transaction, the first transaction is a modified second transaction, the second transaction is stored in a first blockchain, both the first node and the at least one node are nodes in the first blockchain, the first blockchain comprises N blocks, an $i^{th}$ block in the first blockchain comprises a first field and a second field, the second field is used to store a second preset value or a second hash value of a previous block whose block height is the same as a block height of the $i^{th}$ block, and when i=1, the first field is used to store a first preset value, or when i is greater than 1 and less than or equal to N, the first field is used to store a first hash value of a previous block whose block height is different from the block height of the $i^{th}$ block, wherein i is an integer ranging from 1 to N, the first hash value is a hash value obtained according to a first hash function, same output information can be obtained according to the first hash function under a first condition based on different input information, the second hash value is a hash value obtained according to a second hash function, and same output information cannot be obtained according to the second hash function under the first condition based on different input information;
verifying (S303), by the second node, whether modification or the first transaction is valid; and when a verification result is valid, sending (S304), by the second node, a second random number to the first node, wherein the second random number is used to determine a first hash value of a block storing the first transaction, wherein the method further comprises:

receiving (S310), by the second node, a second message, wherein the second message comprises a first random number, and the first random number is used to determine the first hash value of the block storing the first transaction,
wherein the second message comprises information about a first block, and the first block is a block used to store the first transaction,
**characterized in that**:

verification of a second block storing the second transaction uses an accumulator based on a third hash value of the second block, wherein an updated value of the accumulator is stored in a third block, the third block is a block, in the first blockchain, that corresponds to a latest block height, and the third hash value is a hash value obtained according to a third hash function;

and **in that** the method further comprises:

determining, by the second node, a public key of the first hash function, and generating, by the second node, a second private key share; sending, by the second node, f-1 pieces of second information to f-1 nodes, wherein each piece of second information indicates the second private key share, and both the f-1 nodes and the second node are nodes in the first blockchain; receiving, by the second node, $j^{th}$ information from a $j^{th}$ node in the f-1 nodes, wherein the $j^{th}$ information indicates a private key share of the $j^{th}$ node, and j is an integer ranging from 1 to f-1; and obtaining, by the second node, third restoration information based on the received information and one piece of possessed second information, wherein the third restoration information is used to restore a private key corresponding to the public key.

6. The method according to claim 5, wherein the method further comprises:

sending, by the second node, 2f-1 pieces of $(f+2)^{th}$ information to 2f-1 nodes, wherein each piece of $(f+2)^{th}$ information indicates the third restoration information, and the 2f-1 nodes comprise the f-1 nodes; receiving, by the second node, $(f+k)^{th}$ information from a $k^{th}$ node in the 2f-1 nodes, wherein the $(f+k)^{th}$ information indicates restoration information of the $k^{th}$ node, and k is an integer ranging from 1 to 2f-1; and obtaining, by the second node, fourth restoration information based on the received information and one piece of possessed $(f+2)^{th}$ information, wherein the fourth restoration information is used to restore the private key corresponding to the public key.

7. A communication apparatus (700), comprising: a functional module for performing the method according to any one of claims 1 to 4.

8. A communication apparatus (700), comprising: a functional module for performing the method according to claim 5 or 6.

9. A computer-readable storage medium, wherein the computer-readable storage medium is configured to store a computer program, and when the computer program is run on a computer, the computer is enabled to perform the method according to any one of claims 1 to 4.

10. A computer-readable storage medium, wherein the computer-readable storage medium is configured to store a computer program, and when the computer program is run on a computer, the computer is enabled to perform the method according to claim 5 or 6.

**Patentansprüche**

1. Kommunikationsverfahren, umfassend:

Bestimmen (S301), durch einen ersten Knoten, einer ersten Nachricht; und Senden (S302), durch den ersten Knoten, der ersten Nachricht, wobei die erste Nachricht mindestens eines von Anforderungsinformationen und Informationen über eine erste Transaktion umfasst, die Anforderungsinformationen dazu verwendet werden, anzufordern, eine zweite Transaktion zu modifizieren, die erste Transaktion eine modifizierte zweite Transaktion ist, die zweite Transaktion in einer ersten Blockchain gespeichert wird, die erste Blockchain N Blöcke umfasst, ein i-ter Block in der ersten Blockchain ein erstes Feld und ein zweites Feld umfasst, das zweite Feld dazu verwendet wird, einen zweiten voreingestellten Wert oder einen zweiten Hash-Wert eines vorherigen Blockes zu speichern, dessen Blockhöhe die gleiche wie eine Blockhöhe des i-ten Blockes ist, und, wenn i=1, das erste Feld dazu verwendet wird, einen ersten voreingestellten Wert zu speichern, oder, wenn i größer als 1 und kleiner als oder gleich N ist, das erste Feld dazu verwendet wird, einen ersten Hash-Wert eines vorherigen Blockes zu speichern, dessen Blockhöhe sich von der Blockhöhe des i-ten Blockes unterscheidet, wobei i eine Ganzzahl ist, die von 1 bis N reicht, der erste Hash-Wert ein Hash-Wert ist, der gemäß einer ersten Hash-Funktion erlangt wird, gleiche Ausgabeinformationen gemäß der ersten Hash-Funktion unter einer ersten Bedingung basierend auf unterschiedlichen Eingabeinformationen erlangt werden können, der zweite Hash-Wert ein Hash-Wert ist, der gemäß einer zweiten Hash-Funktion erlangt wird, und gleiche Ausgabeinformationen gemäß der zweiten Hash-Funktion unter der ersten Bedingung basierend auf unterschiedlichen Eingabeinformationen nicht erlangt werden können, wobei das Verfahren ferner Folgendes umfasst:

> Empfangen (S307), durch den ersten Knoten, mindestens einer Zufallszahl von mindestens einem Knoten, wobei einer des mindestens einen Knotens einer der mindestens einen Zufallszahl entspricht und sowohl der erste Knoten als auch der mindestens eine Knoten Knoten in der ersten Blockchain sind;
> Bestimmen (S308), durch den ersten Knoten, einer ersten Zufallszahl basierend auf der mindestens einen Zufallszahl, wobei die erste Zufallszahl dazu verwendet wird, einen ersten Hash-Wert eines Blockes zu erlangen, der die erste Transaktion speichert; und
> Senden (S310), durch den ersten Knoten, einer zweiten Nachricht, wobei die zweite Nachricht die erste Zufallszahl umfasst, wobei das Verfahren ferner Folgendes umfasst:
>
>> Erzeugen (S309), durch den ersten Knoten, eines ersten Blockes basierend auf der ersten Zufallszahl, wobei der erste Block dazu verwendet wird, die erste Transaktion zu speichern, der erste Block ein modifizierter zweiter Block ist, der zweite Block dazu verwendet wird, die zweite Transaktion zu speichern, ein erster Hash-Wert des zweiten Blockes der gleiche wie ein erster Hash-Wert des ersten Blockes ist und die zweite Nachricht Informationen über den ersten Block umfasst, **dadurch gekennzeichnet, dass** das Verfahren ferner Folgendes umfasst:
>> Aktualisieren (S311), durch den ersten Knoten, eines Akkumulators basierend auf einem dritten Hash-Wert des zweiten Blockes, wobei ein aktualisierter Wert des Akkumulators in einem dritten Block gespeichert wird, der dritte Block ein Block in der ersten Blockchain ist, der einer neuesten Blockhöhe entspricht, und der dritte Hash-Wert ein Hash-Wert ist, der gemäß einer dritten Hash-Funktion erlangt wird.

**2.** Verfahren nach Anspruch 1, wobei die erste Hash-Funktion eine Chamäleon-Hash-Funktion und die zweite Hash-Funktion eine Nicht-Chamäleon-Hash-Funktion ist.

**3.** Verfahren nach Anspruch 1 oder 2, wobei das Verfahren ferner Folgendes umfasst:
Senden, durch den ersten Knoten, von Transaktionsinformationen und eines Zeugen an einen Überprüfungsknoten, wobei die Transaktionsinformationen die Informationen über die erste Transaktion sind und der Zeuge ein Nichtmitgliedschaftszeuge des ersten Blockes ist oder die Transaktionsinformationen Informationen über die zweite Transaktion sind und der Zeuge ein Mitgliedschaftszeuge des zweiten Blockes ist, wobei der erste Block dazu verwendet wird, die erste Transaktion zu speichern, der Nichtmitgliedschaftszeuge dazu verwendet wird, mit Bezug auf den Akkumulator zu überprüfen, ob der erste Block ein neuester Block ist, der über Modifikation erlangt wird, und der Mitgliedschaftszeuge dazu verwendet wird, mit Bezug auf den Akkumulator zu überprüfen, ob der zweite Block modifiziert ist.

**4.** Verfahren nach Anspruch 3, wobei das Verfahren ferner Folgendes umfasst:

> Empfangen, durch den ersten Knoten, zu bestätigender Informationen von dem Überprüfungsknoten;
> Erzeugen, durch den ersten Knoten, eines vereinfachten Zeugen basierend auf den zu bestätigenden Informationen, wobei der vereinfachte Zeuge durch Vereinfachen des Zeugen erlangt wird; und
> Senden, durch den ersten Knoten, des vereinfachten Zeugen an den Überprüfungsknoten.

**5.** Kommunikationsverfahren, umfassend:

> Empfangen (S302), durch einen zweiten Knoten, einer ersten Nachricht von einem ersten Knoten, wobei die erste Nachricht mindestens eines von Anforderungsinformationen und Informationen über eine erste Transaktion umfasst, die Anforderungsinformationen dazu verwendet werden, anzufordern, eine zweite Transaktion zu modifizieren, die erste Transaktion eine modifizierte zweite Transaktion ist, die zweite Transaktion in einer ersten Blockchain gespeichert wird, sowohl der erste Knoten als auch der mindestens eine Knoten Knoten in der ersten Blockchain sind, die erste Blockchain N Blöcke umfasst, ein i-ter Block in der ersten Blockchain ein erstes Feld und ein zweites Feld umfasst, das zweite Feld dazu verwendet wird, einen zweiten voreingestellten Wert oder einen zweiten Hash-Wert eines vorherigen Blockes zu speichern, dessen Blockhöhe die gleiche wie eine Blockhöhe des i-ten Blockes ist, und, wenn i=1, das erste Feld dazu verwendet wird, einen ersten voreingestellten Wert zu speichern, oder, wenn i größer als 1 und kleiner als oder gleich N ist, das erste Feld dazu verwendet wird, einen ersten Hash-Wert eines vorherigen Blockes zu speichern, dessen Blockhöhe sich von der Blockhöhe des i-ten Blockes unterscheidet, wobei i eine Ganzzahl ist, die von 1 bis N reicht, der erste Hash-Wert ein Hash-Wert ist, der gemäß einer ersten Hash-Funktion erlangt wird, gleiche Ausgabeinformationen gemäß der ersten Hash-Funktion unter einer ersten Bedingung basierend auf unterschiedlichen Eingabeinformationen erlangt werden können, der zweite Hash-Wert ein Hash-Wert ist, der gemäß einer zweiten Hash-Funktion erlangt wird, und gleiche Ausgabeinformationen gemäß der zweiten Hash-Funktion unter der ersten Bedingung basierend auf unterschiedlichen Eingabeinformationen nicht erlangt werden können;
Überprüfen (S303), durch den zweiten Knoten, ob die Modifikation oder die erste Transaktion gültig ist; und
wenn ein Überprüfungsergebnis gültig ist, Senden (S304), durch den zweiten Knoten, einer zweiten Zufallszahl an den ersten Knoten, wobei die zweite Zufallszahl dazu verwendet wird, einen ersten Hash-Wert eines Blockes zu bestimmen, der die erste Transaktion speichert, wobei das Verfahren ferner Folgendes umfasst:

Empfangen (S310), durch den zweiten Knoten, einer zweiten Nachricht, wobei die zweite Nachricht eine erste Zufallszahl umfasst und die erste Zufallszahl dazu verwendet wird, den ersten Hash-Wert des Blockes zu bestimmen, der die erste Transaktion speichert,
wobei die zweite Nachricht Informationen über einen ersten Block umfasst und der erste Block ein Block ist, der dazu verwendet wird, die erste Transaktion zu speichern,
durch Folgendes gekennzeichnet:

eine Überprüfung eines zweiten Blockes, der die zweite Transaktion speichert, verwendet einen Akkumulator basierend auf einem dritten Hash-Wert des zweiten Blockes, wobei ein aktualisierter Wert des Akkumulators in einem dritten Block gespeichert wird, der dritte Block ein Block in der ersten Blockchain ist, der einer neuesten Blockhöhe entspricht, und der dritte Hash-Wert ein Hash-Wert ist, der gemäß einer dritten Hash-Funktion erlangt wird;

und dadurch, dass das Verfahren ferner Folgendes umfasst:

Bestimmen, durch den zweiten Knoten, eines öffentlichen Schlüssels der ersten Hash-Funktion und Erzeugen, durch den zweiten Knoten, einer zweiten privaten gemeinsamen Schlüsselnutzung;
Senden, durch den zweiten Knoten, von f-1 Elementen zweiter Informationen an f-1 Knoten, wobei jedes Element zweiter Informationen die zweite private gemeinsame Schlüsselnutzung angibt und sowohl die f-1 Knoten als auch der zweite Knoten Knoten in der ersten Blockchain sind;
Empfangen, durch den zweiten Knoten, j-ter Informationen von einem j-ten Knoten in den f-1 Knoten, wobei die j-ten Informationen eine private gemeinsame Schlüsselnutzung des j-ten Knotens angeben und j eine Ganzzahl ist, die von 1 bis f-1 reicht; und
Erlangen, durch den zweiten Knoten, dritter Wiederherstellungsinformationen basierend auf den empfangenen Informationen und einem Element besessener zweiter Informationen, wobei die dritten Wiederherstellungsinformationen dazu verwendet werden, einen privaten Schlüssel wiederherzustellen, der dem öffentlichen Schlüssel entspricht.

6. Verfahren nach Anspruch 5, wobei das Verfahren ferner Folgendes umfasst:

Senden, durch den zweiten Knoten, von 2f-1 Elementen (f+2)-ter Informationen an 2f-1 Knoten, wobei jedes Element (f+2)-ter Informationen die dritten Wiederherstellungsinformationen angibt und die 2f-1 Knoten die f-1 Knoten umfassen;
Empfangen, durch den zweiten Knoten, (f+k)-ter Informationen von einem k-ten Knoten in den 2f-1 Knoten, wobei die (f+k)-ten Informationen Wiederherstellungsinformationen des k-ten Knotens angeben und keine Ganzzahl ist, die von 1 bis 2f-1 reicht; und
Erlangen, durch den zweiten Knoten, vierter Wiederherstellungsinformationen basierend auf den empfangenen Informationen und einem Element besessener (f+2)-ter Informationen, wobei die vierten Wiederherstellungsinformationen dazu verwendet werden, den privaten Schlüssel wiederherzustellen, der dem öffentlichen Schlüssel entspricht.

7.  Kommunikationsvorrichtung (700), umfassend: ein Funktionsmodul zum Durchführen des Verfahrens nach einem der Ansprüche 1 bis 4.

8.  Kommunikationsvorrichtung (700), umfassend: ein Funktionsmodul zum Durchführen des Verfahrens nach Anspruch 5 oder 6.

9.  Computerlesbares Speichermedium, wobei das computerlesbare Speichermedium dazu konfiguriert ist, ein Computerprogramm zu speichern, und, wenn das Computerprogramm auf einem Computer ausgeführt wird, es dem Computer ermöglicht wird, das Verfahren nach einem der Ansprüche 1 bis 4 durchzuführen.

10. Computerlesbares Speichermedium, wobei das computerlesbare Speichermedium dazu konfiguriert ist, ein Computerprogramm zu speichern, und, wenn das Computerprogramm auf einem Computer ausgeführt wird, es dem Computer ermöglicht wird, das Verfahren nach Anspruch 5 oder 6 durchzuführen.

**Revendications**

1.  Procédé de communication, comprenant :

    la détermination (S301), par un premier nœud, d'un premier message ; et
    l'envoi (S302), par le premier nœud, du premier message, dans lequel le premier message comprend au moins l'une des informations de requête et des informations sur une première transaction, les informations de requête sont utilisées pour demander la modification d'une seconde transaction, la première transaction est une seconde transaction modifiée, la seconde transaction est stockée dans une première chaîne de blocs, la première chaîne de blocs comprend N blocs, un $i$-ème bloc dans la première chaîne de blocs comprend un premier champ et un second champ, le second champ est utilisé pour stocker une seconde valeur prédéfinie ou une deuxième valeur de hachage d'un bloc précédent dont la hauteur de bloc est identique à une hauteur de bloc du $i$-ème bloc, et lorsque i = 1, le premier champ est utilisé pour stocker une première valeur prédéfinie, ou lorsque i est supérieur à 1 et inférieur ou égal à N, le premier champ est utilisé pour stocker une première valeur de hachage d'un bloc précédent dont la hauteur de bloc est différente de la hauteur de bloc du $i$-ème bloc, dans lequel

i est un entier allant de 1 à N, la première valeur de hachage est une valeur de hachage obtenue selon une première fonction de hachage, les mêmes informations de sortie peuvent être obtenues selon la première fonction de hachage sous une première condition sur la base d'informations d'entrée différentes, la deuxième valeur de hachage est une valeur de hachage obtenue selon une deuxième fonction de hachage, et les mêmes informations de sortie ne peuvent pas être obtenues selon la deuxième fonction de hachage sous la première condition sur la base d'informations d'entrée différentes,
dans lequel le procédé comprend également :

    la réception (S307), par le premier nœud, d'au moins un nombre aléatoire provenant d'au moins un nœud, dans lequel un de l'au moins un nœud correspond à l'un de l'au moins un nombre aléatoire, et le premier nœud et l'au moins un nœud sont des nœuds dans la première chaîne de blocs ;
    la détermination (S308), par le premier nœud, d'un premier nombre aléatoire sur la base de l'au moins un nombre aléatoire, dans lequel le premier nombre aléatoire est utilisé pour obtenir une première valeur de hachage d'un bloc stockant la première transaction ; et
    l'envoi (S310), par le premier nœud, d'un second message, dans lequel le second message comprend le premier nombre aléatoire,
    dans lequel le procédé comprend également-ment :

    la génération (S309), par le premier nœud, d'un premier bloc sur la base du premier nombre aléatoire, dans lequel le premier bloc est utilisé pour stocker la première transaction, le premier bloc est un deuxième bloc modifié, le deuxième bloc est utilisé pour stocker la seconde transaction, une première valeur de hachage du deuxième bloc est la même qu'une première valeur de hachage du premier bloc, et le second message comprend des informations sur le premier bloc,
    **caractérisé en ce que** le procédé comprend également :
    la mise à jour (S311), par le premier nœud, d'un accumulateur sur la base d'une troisième valeur de hachage du deuxième bloc, dans lequel une valeur mise à jour de l'accumulateur est stockée dans un troisième bloc, le troisième bloc est un bloc, dans la première chaîne de blocs, qui correspond à une hauteur de bloc la plus récente, et la troisième valeur de hachage est une valeur de hachage obtenue selon une troisième fonction de hachage.

2. Procédé selon la revendication 1, dans lequel la première fonction de hachage est une fonction de hachage caméléon, et la deuxième fonction de hachage est une fonction de hachage non caméléon.

3. Procédé selon la revendication 1 ou 2, dans lequel le procédé comprend également :
l'envoi, par le premier nœud, d'informations de transaction et d'un témoin à un nœud de vérification, dans lequel les informations de transaction sont les informations sur la première transaction, et le témoin est un témoin non membre du premier bloc, ou les informations de transaction sont des informations sur la seconde transaction, et le témoin est un témoin membre du second bloc, dans lequel le premier bloc est utilisé pour stocker la première transaction, le témoin non membre est utilisé pour vérifier, en référence à l'accumulateur, si le premier bloc est un bloc le plus récent obtenu par modification, et le témoin membre est utilisé pour vérifier, en référence à l'accumulateur, si le second bloc est modifié.

4. Procédé selon la revendication 3, dans lequel le procédé comprend également :

la réception, par le premier nœud, d'informations à reconnaître provenant du nœud de vérification ;
la génération, par le premier nœud, d'un témoin simplifié sur la base des informations à reconnaître, dans lequel le témoin simplifié est obtenu en simplifiant le témoin ; et
l'envoi, par le premier nœud, du témoin simplifié au nœud de vérification.

5. Procédé de communication, comprenant :

la réception (S302), par un second nœud, d'un premier message provenant d'un premier nœud, dans lequel le premier message comprend au moins l'une des informations de requête et des informations sur une première transaction, les informations de requête sont utilisées pour demander la modification d'une seconde transaction, la première transaction est une seconde transaction modifiée, la seconde transaction est stockée dans une première chaîne de blocs, le premier nœud et l'au moins un nœud sont des nœuds dans la première chaîne de blocs, la première chaîne de blocs comprend N blocs, un i-ème bloc dans la première chaîne de blocs comprend un premier champ et un second champ, le second champ est utilisé pour stocker une seconde valeur prédéfinie ou une deuxième valeur de hachage d'un bloc précédent dont la hauteur de bloc est identique à une hauteur de bloc du i-ème bloc, et lorsque i = 1, le premier champ est utilisé pour stocker une première valeur prédéfinie, ou lorsque i est supérieur à 1 et inférieur ou égal à N, le premier champ est utilisé pour stocker une première valeur de hachage d'un bloc précédent dont la hauteur de bloc est différente de la hauteur de bloc du i-ème bloc, dans lequel i est un entier allant de 1 à N, la première valeur de hachage est une valeur de hachage obtenue selon une première fonction de hachage, les mêmes informations de sortie peuvent être obtenues selon la première fonction de hachage sous une première condition sur la base d'informations d'entrée différentes, la deuxième valeur de hachage est une valeur de hachage obtenue selon une deuxième fonction de hachage, et les mêmes informations de sortie ne peuvent pas être obtenues selon la deuxième fonction de hachage sous la première condition sur la base d'informations d'entrée différentes ;
le fait de vérifier (S303), par le second nœud, si la modification ou la première transaction est valide ; et
lorsqu'un résultat de vérification est valide, l'envoi (S304), par le second nœud, d'un second nombre aléatoire au premier nœud, dans lequel le second nombre aléatoire est utilisé pour déterminer une première valeur de hachage d'un bloc stockant la première transaction,
dans lequel le procédé comprend également :

la réception (S310), par le second nœud, d'un second message, dans lequel le second message comprend un premier nombre aléatoire, et le premier nombre aléatoire est utilisé pour déterminer la première valeur de hachage du bloc stockant la première transaction,
dans lequel le second message comprend des informations sur un premier bloc, et le premier bloc est un bloc utilisé pour stocker la première transaction,
**caractérisé en ce que** :

la vérification d'un deuxième bloc stockant la seconde transaction utilise un accumulateur sur la base d'une troisième valeur de hachage du deuxième bloc, dans lequel une valeur mise à jour de l'accumulateur est stockée dans un troisième bloc, le troisième bloc est un bloc, dans la première chaîne de blocs, qui correspond à une hauteur de bloc la plus récente, et la troisième valeur de hachage est une valeur de hachage obtenue selon une troisième fonction de hachage ;

et **en ce que** le procédé comprend également :

la détermination, par le second nœud, d'une clé publique de la première fonction de hachage, et la génération, par le second nœud, d'un second partage de clé privée ; l'envoi, par le second nœud, de f-1 éléments de secondes informations à f-1 nœuds, dans lequel chaque élément de secondes informations indique le second partage de clé privée, et les f-1 nœuds et le second nœud sont des nœuds dans la première chaîne de blocs ; la réception, par le second nœud, de $j^{-ème}$ informations provenant d'un $j^{-ème}$ nœud dans les f-1 nœuds, dans lequel les $j^{-ème}$ informations indiquent un partage de clé privée du $j^{-ème}$ nœud, et j est un entier allant de 1 à f-1 ; et l'obtention, par le second nœud, de troisièmes informations de restauration sur la base des informations reçues et d'un élément de deuxièmes informations possédées, dans lequel les troisièmes informations de restauration sont utilisées pour restaurer une clé privée correspondant à la clé publique.

6. Procédé selon la revendication 5, dans lequel le procédé comprend également :

l'envoi, par le second nœud, de 2f-1 éléments de $(f+2)^{-ème}$ informations à 2f-1 nœuds, dans lequel chaque élément de $(f+2)^{-ème}$ informations indique les troisièmes informations de restauration, et les 2f-1 nœuds comprennent les f-1 nœuds ; la réception, par le second nœud, des $(f+k)^{-ème}$ informations d'un $k^{-ème}$ nœud parmi les 2f-1 nœuds, dans lequel les $(f+k)^{-ème}$ informations indiquent les informations de restauration du $k^{-ème}$ nœud, et k est un entier allant de 1 à 2f-1 ; et l'obtention, par le second nœud, de quatrièmes informations de restauration sur la base des informations reçues et d'un élément de $(f+2)^{-ème}$ informations possédées, dans lequel les quatrièmes informations de restauration sont utilisées pour restaurer la clé privée correspondant à la clé publique.

7. Appareil de communication (700), comprenant : un module fonctionnel de réalisation du procédé selon l'une quelconque des revendications 1 à 4.

8. Appareil de communication (700), comprenant : un module fonctionnel de réalisation du procédé selon la revendication 5 ou 6.

9. Support de stockage lisible par ordinateur, dans lequel le support de stockage lisible par ordinateur est configuré pour stocker un programme informatique, et lorsque le programme informatique fonctionne sur un ordinateur, l'ordinateur est activé pour réaliser le procédé selon l'une quelconque des revendications 1 à 4.

10. Support de stockage lisible par ordinateur, dans lequel le support de stockage lisible par ordinateur est configuré pour stocker un programme informatique, et lorsque le programme informatique fonctionne sur un ordinateur, l'ordinateur est activé pour réaliser le procédé selon la revendication 5 ou 6.

| First field | Tree root field | Difficulty field |
|---|---|---|

| Timestamp field | First random number field | Accumulator field |
|---|---|---|

| Second field | Second random number field |
|---|---|

Tree root field

$hash_{12}$

$hash_{34}$

$tx_1$

$tx_2$

$tx_3$

$tx_4$

FIG. 1

EP 4 386 575 B1

Block height H−1

| First field | Tree root field | Difficulty field |
|---|---|---|
| Timestamp field | First random number field | Accumulator field |

| Second field | Second random number field |
|---|---|

Block 1

Block height H

| First field | Tree root field | Difficulty field |
|---|---|---|
| Timestamp field | First random number field | Accumulator field |

| Second field | Second random number Field |
|---|---|

Block 1

Block height H+1

| First field | Tree root field | Difficulty field |
|---|---|---|
| Timestamp field | First random number field | Accumulator field |

| Second field | Second random number field |
|---|---|

Tree root field

hash$_{12}$    hash$_{34}$

tx$_1$  tx$_2$  tx$_3$  tx$_4$

Block 3

Block height H (lower)

| First field | Tree root field | Difficulty field |
|---|---|---|
| Timestamp field | First random number field | Accumulator field |

| Second field | Second random number field |
|---|---|

Block 4

FIG. 2

First node | Second node | ... | m<sup>th</sup> node

S301: Determine a first message (including request information and/or information about a first transaction)

S302: First message

S302: First message

S303: Verify content of the first message

S303: Verify the content of the first message

S304: Acknowledgment information

S304: Acknowledgment information

S305: ID of another node other than the second node

S305: ID of another node other than the m<sup>th</sup> node

S306: Calculate a random number 1

S306: Calculate a random number m

S307: Random number 1

S307: Random number m

S308: Determine a first random number based on t random numbers

S309: Generate a first block based on the first random number

S310: First random number and/or information about the first block

S310: First random number and/or information about the first block

S311: Update an accumulator based on a third hash value of a second block

FIG. 3

FIG. 4

| Node 1 | Node 2 | ... | Node f |
|---|---|---|---|
| S501: Generate $p_1$ | S501: Generate $p_2$ | | S501: Generate $p_f$ |
| S502: Generate p, and determine whether p is a prime number | S502: Generate p, and determine whether p is a prime number | | S502: Generate p, and determine whether p is a prime number |
| S503: Generate $q_1$ | S503: Generate $q_2$ | | S503: Generate $q_f$ |
| S504: Generate q, and determine whether q is a prime number | S504: Generate q, and determine whether q is a prime number | | S504: Generate q, and determine whether q is a prime number |
| S505: Determine N, and determine whether N is a product of two prime numbers | S505: Determine N, and determine whether N is a product of two prime numbers | | S505: Determine N, and determine whether N is a product of two prime numbers |
| S506: Determine a public key of a first hash function | S506: Determine a public key of a first hash function | | S506: Determine a public key of a first hash function |

S507: Second information →

S507: Second information →

← S507: Third information

S507: Third information →

← S507: $(f+1)^{th}$ information

← S507: $(f+1)^{th}$ information

FIG. 5

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111753335 A

- CN 111639935 A

**Non-patent literature cited in the description**

- Redactable Blockchain - or - Rewriting History in Bitcoin and Friends. **ATENIESE GIUSEPPE et al.** EUROPEAN SYMPOSIUM ON SECURITY AND PRIVACY (EUROS&P). IEEE, 26 April 2017, 111-126